# EUROPEAN PATENT SPECIFICATION

(11) **EP 4 513 914 B1**
(45) Date of publication and mention of the grant of the patent: **04.03.2026**
(21) Application number: 23806807.6
(22) Date of filing: 11.05.2023
(51) Int. Cl.: H04W 8/18, H04L 69/24, H04W 8/22, H04W 8/24, H04W 88/14, H04W 28/18

(54) **DATA CHANNEL APPLICATION LIST PROCESSING METHOD, APPARATUS, AND DEVICE**
VERFAHREN, VORRICHTUNG UND VORRICHTUNG ZUR VERARBEITUNG VON DATENKANALANWENDUNGSLISTEN
PROCÉDÉ, APPAREIL ET DISPOSITIF DE TRAITEMENT DE LISTE D'APPLICATIONS DE CANAL DE DONNÉES

(30) Priority: 17.05.2022 CN 202210536064
(43) Date of publication of application: 26.02.2025
(73) Proprietor: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN)
(74) Representative: Murgitroyd & Company
(86) International application number: PCT/CN2023/093511
(87) International publication number: WO 2023/221855

(56) References cited:
- WO-A1-2021/204270
- CN-A- 104 519 022
- CN-A- 112 260 895
- CN-A- 113 259 925
- CN-A- 113 259 925
- CMCC ET AL: "Solutions on interworking between a DCMTSI client in terminal and an MTSI client in terminal", vol. SA WG2, no. e-meeting; 20220516 - 20220520, 6 May 2022 (2022-05-06), XP052159945, Retrieved from the Internet <URL:https://ftp.3gpp.org/tsg_sa/WG2_Arch/TSGS2_151E_Electronic_2022-05/Docs/S2-2204447.zip S2-2204447 NGRTC Solution� to� interworking� between� a� DCMTSI� client� in� terminal.docx> [retrieved on 20220506]
- "3rd Generation Partnership Project; Technical Specification Group Services and System Aspects; Study on system architecture enhancement for next generation real time communication; Phase 2 (Release 18)", no. V0.2.0, 19 April 2022 (2022-04-19), pages 1 - 68, XP052146019, Retrieved from the Internet <URL:https://ftp.3gpp.org/Specs/archive/23_series/23.700-87/23700-87-020.zip 23700-87-020-rm.doc> [retrieved on 20220419]
- "3rd Generation Partnership Project; Technical Specification Group Services and System Aspects; Study on system architecture enhancement for next generation real time communication; Phase 2 (Release 18)", 19 April 2022 (2022-04-19), XP052136810, Retrieved from the Internet <URL:https://ftp.3gpp.org/tsg_sa/WG2_Arch/Latest_SA2_Specs/Latest_draft_S2_Specs/23700-87-020.zip 23700-87-020-rm.doc> [retrieved on 20220419]

## Description

### TECHNICAL FIELD

This application pertains to the field of communication technologies, and specifically relates to a method for processing a data channel application list, a core network device, a terminal device, a chip, and a computer program product.

### BACKGROUND

With the development of communication technologies, additional services can be gradually performed during the call, such as screen sharing, location sharing, or file transmission. At present, a mechanism of establishing a data channel (Data Channel, DC) during a call is introduced in the Third Generation Partnership Projects (Third Generation Partnership Projects, 3GPP) standard, so as to implement additional services during the call through the DC and bring better experience to users.

Different services correspond to different DC applications (application) (the DC application can also be referred to as APP), and the DC application can be downloaded dynamically during the call, and does not need to be installed in advance by a terminal device, thus facilitating use of a user. For example, if two communication parties enable an APP, they need to dynamically download the APP from a DC server and establish a corresponding application data channel (application DC) for the APP. Different APPs may have different quality of service (quality of service, QoS) requirements, for example, augmented reality (Augmented Reality, AR) applications require low latency and high throughput, and screen sharing applications require timeliness. Therefore, usually each APP needs to establish its own corresponding application DC.

At present, before the terminal device downloads an APP, the network delivers one application list (APP list), and the application list includes all APPs. However, the DC capabilities of the two communication parties may be different, and the terminal device may select, from the APP list, a to-be-downloaded APP that may not be supported by a peer device. For example, a calling terminal device supports AR call, and a called terminal device does not support AR call. Consequently, a terminal device may download a DC application that is not supported by a peer terminal device.

D1 ("Solutions on interworking between a DCMTSI client in terminal and an MTSI client in terminal", S2-2204447) discloses a method for achieving the one-side interactive communication between a DCMTSI client in terminal and an MTSI client in terminal. The DCMTSI client in terminal establishes application data channels with the DCS-M in its local network and transfers its mobile screen data, including RTP stream and RTCP stream, over the application data channels. The DCM decapsulates RTP data and RTCP data from the data channels, encapsulates and sends these data through video channels to the MTSI client in terminal.

D2 ("Study on system architecture enhancement for next generation real time communication", XP052146019) discloses a method for discovering the data channel capabilities of the UE and network. The network discovers the data channel capability of the UE, including the local UE and the remote UE. The UE discovers the data channel capability of the network, including the local network and the remote network.

D3 (CN113259925A) discloses a dual-card dual-standby dual-pass method, which are used for realizing dual-card dual-standby dual-pass. In the embodiment of the invention, the terminal equipment includes N transmitting radio frequency channels; where the first communication card has the capability of supporting K1 transmitting radio frequency channels, and the second communication card has the capability of supporting K2 transmitting radio frequency channels. When the first communication card and the second communication card are inserted into the terminal equipment, the capability indication information reported by the terminal equipment indicates that the first communication card has the capability of supporting M transmitting radio frequency channels, and the second communication card has the capability of supporting (N-M) transmitting radio frequency channels.

### SUMMARY

Embodiments of this application provide a method and an apparatus for processing a data channel application list, and a device, which can resolve the prior-art problem that before an application DC is established, an APP list sent by a network side to a terminal device is improper, which may cause one terminal device to download a DC application that is not supported by a peer terminal device.

According to a first aspect, a method for processing a data channel application list is provided, which is defined in claim 1.

According to a second aspect, a method for processing a data channel application list is provided, which is defined in claim 10.

According to a third aspect, a core network device is provided, which is defined in claim 12.

According to a fourth aspect, a terminal device is provided, which is defined in claim 13.

According to a fifth aspect, a chip is provided, which is defined in claim 14.

According to a sixth aspect, a computer program product is provided, which is defined in claim 15.

Further advantageous embodiments of the present application are indicated in the dependent claims.

It is to be understood that both the forgoing general description and the following detailed description are exemplary only, and are not restrictive of the present application.

### BRIEF DESCRIPTION OF DRAWINGS

FIG. 1 is a schematic structural diagram of a wireless communication system according to an embodiment of this application;
FIG. 2 is a flowchart of a method for processing a data channel application list according to an embodiment of this application;
FIG. 3 is a flowchart of another method for processing a data channel application list according to an embodiment of this application;
FIG. 4 is a flowchart of another method for processing a data channel application list according to an embodiment of this application;
FIG. 5 is a flowchart of a specific implementation of a method for processing a data channel application list according to an embodiment of this application;
FIG. 6 is a structural block diagram of an apparatus for processing a data channel application list according to an embodiment of this application;
FIG. 7 is a structural block diagram of another apparatus for processing a data channel application list according to an embodiment of this application;
FIG. 8 is a structural block diagram of another apparatus for processing a data channel application list according to an embodiment of this application;
FIG. 9 is a structural block diagram of a communication device according to an embodiment of this application;
FIG. 10 is a structural block diagram of a terminal device according to an embodiment of this application; and
FIG. 11 is a structural block diagram of a core network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

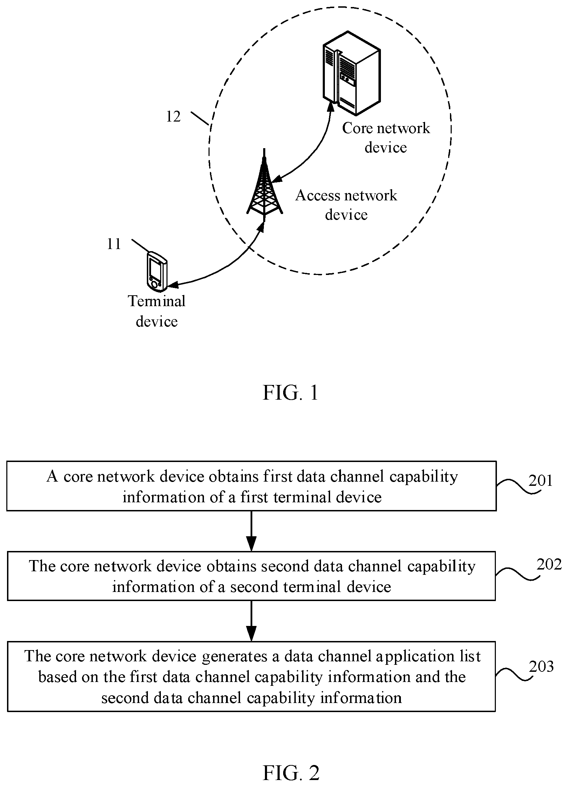

FIG. 1 is a block diagram of a wireless communication system to which the embodiments of this application are applicable. The wireless communication system includes a terminal device 11 and a network-side device 12. The terminal device 11 may be a terminal, an electronic device, or a communication device, and the terminal device 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal device 11 is not limited in the embodiments of this application. In addition to the foregoing terminal device, it may alternatively be a chip in a terminal, such as a modem (Modem) chip or a system on chip (System on Chip, SoC).

The network-side device 12 may include an access network device and/or a core network device, where the access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include, but is not limited to, at least one of the following: a core network node, a mobility management entity (Mobility Management Entity, MME), and a core network function. The core network function may include one or more of the following: an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes in detail a method for processing a data channel application list provided in the embodiments of this application by using some embodiments and application scenarios thereof with reference to the accompanying drawings.

In a first aspect, as shown in FIG. 2, FIG. 2 is a flowchart of a method for processing a data channel application list according to an embodiment of this application, and the method may include the following steps.

Step 201: A core network device obtains first data channel capability information of a first terminal device.

Step 202: The core network device obtains second data channel capability information of a second terminal device.

The first terminal device and the second terminal device are devices of two communication parties, which, for example, may be devices of call parties (that is, a calling party device and a called party device). The core network device may be a data channel server (DC Server) that provides services for the first terminal device or a DC Server that provides services for the second terminal device.

For example, in a wireless communication system shown in FIG. 1, if two terminal devices 11 need to perform an additional service (such as screen sharing, location sharing, or file transmission) during a call, the core network device may obtain data channel capabilities of the two terminal devices 11, generate a data channel application list based on the data channel capabilities of the two terminal devices 11, and send it to at least one of the terminal devices 11, so that the terminal device can trigger downloading of a data channel application and a process of establishing a data channel.

Step 203: The core network device generates a data channel application list based on the first data channel capability information and the second data channel capability information.

In addition, the data channel capability information includes at least one of the following:
a video codec (video codec) capability;
an artificial intelligence capability (Artificial Intelligence capability);
a positioning capability (positioning capability);
an augmented reality communication capability (Augmented Reality communication capability);
a screen sharing capability (Screen Sharing); and
a white board capability (white board).

A data channel application supported by the first terminal device and a data channel application not supported by the first terminal device may be determined based on the first data channel capability information. A data channel application supported by the second terminal device and a data channel application not supported by the second terminal device may be determined based on the second data channel capability information. Therefore, the data channel application list generated based on the first data channel capability information and the second data channel capability information conforms to an actual status of supporting data channel applications by the first terminal device and the second terminal device.

It should be noted that the data channel applications in the generated data channel application list may be supported by both the first terminal device and the second terminal device, or supported by one of the first terminal device and the second terminal device, where the other one does not (directly) support but may use the data channel application through assistance (for example, interaction or interworking) of a network-side device.

In an embodiment of this application, the method further includes:
the core network device obtains first target information of the first terminal device, where the first target information includes at least one of subscription information and other capability information than the first data channel capability information in capability information of the first terminal device; and
the core network device obtains second target information of the second terminal device, where the second target information includes at least one of subscription information and other capability information than the second data channel capability information in capability information of the second terminal device.

The generating, by the core network device, a data channel application list based on the first data channel capability information and the second data channel capability information includes:
generating, by the core network device, a data channel application list based on the first data channel capability information, the second data channel capability information, the first target information, and the second target information.

The first target information may include at least one of a screen display capability, a data processing capability, and a computing capability of the first terminal device; and the second target capability information may include at least one of a screen display capability, a data processing capability, and a computing capability of the second terminal device.

It can be learned from the foregoing that the core network device may further generate a data channel application list based on other capabilities (such as a screen display capability, a data processing capability, and a computing capability) in addition to generating a data channel application list based on the data channel capabilities of the two terminal devices; or may generate a data channel application list based on the subscription information, for example, if AR communication requires extra payment, only a terminal device that has subscribed to use of the AR communication service can download an AR application; or may generate a data channel application list based on other capability information and subscription information.

Therefore, all data channel application lists generated based on capabilities of two terminal devices and/or subscription information fall within the protection scope of this application.

It can be learned based on the steps 201 to 203 that, in this embodiment of this application, the core network device may obtain the first data channel capability information of the first terminal device and the second data channel capability information of the second terminal device, so as to generate a data channel application list based on the first data channel capability information and the second data channel capability information. It can be learned that in this embodiment of this application, the core network device may generate, based on data channel capabilities of two communication parties, a data channel application list conforming to an actual status of supporting data channel applications by the two communication parties.

In an embodiment of this application, the method further includes:
sending, by the core network device, a data channel application list to at least one of the first terminal device and the second terminal device.

In the prior art, when DC capabilities of two communication parties are different, a terminal device may download a DC application that is not supported by a peer terminal device. For example, a calling terminal device supports AR call and a called terminal device does not support the AR call. In this way, if the calling terminal device selects and downloads an AR call APP and initiates a process of establishing an application DC, this may cause a failure in establishment of the application DC, thus wasting resources such as traffic resources, power resources, and storage resources, and wasting time.

However, in this embodiment of this application, the core network device may generate, based on data channel capabilities of two communication parties, a data channel application list conforming to an actual status of supporting data channel applications by the two communication parties, so as to send the data channel application list to the first terminal device and/or the second terminal device. After receiving the data channel application list, the first terminal device and/or the second terminal device may select, from the data channel application list, a data channel application that conforms to an actual status of supporting data channel applications by one party and the other party, thereby reducing a probability of downloading a data channel application not supported by the other party, further reducing a probability of data channel establishment failure and saving resources and time.

In an embodiment of this application, the obtaining, by a core network device, first data channel capability information of a first terminal device includes:
receiving, by the core network device, the first data channel capability information sent by the first terminal device during establishment of a bootstrap (bootstrap) data channel;
   or
receiving, by the core network device, the first data channel capability information sent by the first terminal device via a bootstrap data channel;
   or
sending, by the core network device, a first request message to the first terminal device, where the first request message is used to instruct the first terminal device to send the first data channel capability information; and
receiving, by the core network device, the first data channel capability information sent by the first terminal device in response to the first request message;
   or
obtaining, by the core network device, the first data channel capability information sent by the first terminal device during registration.

It can be learned from the foregoing that the first data channel capability information of the first terminal device may be transmitted to the core network device during the establishment of the bootstrap data channel, or may be transmitted to the core network device via the bootstrap data channel after the bootstrap data channel is established; or may be requested by the core network device from the first terminal device; or may be sent to the core network device during registration of the first terminal device.

The bootstrap data channel includes a bootstrap data channel between the first terminal device and the core network device, and a bootstrap data channel between the second terminal device and the core network device. The core network device receives the first data channel capability information sent by the first terminal device via the bootstrap data channel, that is, the core network device receives the first data channel capability information sent by the first terminal device via the bootstrap data channel between the first terminal device and the core network device.

For example, that the core network device receives the first data channel capability information sent by the first terminal device via the bootstrap data channel between the first terminal device and the core network device may include: the core network device sends a seventh request message (such as a hyper text transfer protocol (Hyper Text Transfer Protocol, HTTP) message or a session initiation protocol (Session Initiation Protocol, SIP) message) to the first terminal device via the bootstrap data channel between the first terminal device and the core network device, where the seventh request message is used to instruct the first terminal device to send the first data channel capability information; and the core network device receives the first data channel capability information sent by the first terminal device via the bootstrap data channel between the first terminal device and the core network device.

In addition, it should be noted that the first request message may include one piece of clear indication information, where the indication information is used to instruct the first terminal device to send the first data channel capability information; or the first request message may include one piece of information, where the information is used by the first terminal device to determine to send the first data channel capability information to the core network device.

Similarly, it should be noted that the seventh request message may include one piece of clear indication information, where the indication information is used to instruct the first terminal device to send the first data channel capability information; or the seventh request message may include one piece of information, where the information is used by the first terminal device to determine to send the first data channel capability information to the core network device.

In an embodiment of this application, the receiving, by the core network device, the first data channel capability information sent by the first terminal device in a process of establishing a bootstrap data channel includes:
receiving, by the core network device, a second request message;
   or
receiving, by the core network device, the first data channel capability information sent by an application server in response to a second request message; where
the second request message is a request message for establishing the bootstrap data channel during establishment of the bootstrap data channel, and the second request message carries the first data channel capability information.

It can be learned from the foregoing that the first data channel capability information may be carried in a request message for establishing a bootstrap data channel (that is, the second request message) and sent to the core network device by the first terminal device; or the first terminal device sends it to an application server, and then the application server sends the first data channel capability information to the core network device. This application server may be an application server (Application Server, AS) within an IP multimedia subsystem (IP Multimedia Subsystem, IMS) network, such as a telephony application server (Telephony Application Server, TAS), a multimedia telephony application server (MultiMedia Telephony Application Server, MMTEL AS), a data channel application server (Data Channel Application Server, DC AS), or the like.

It should be noted here that if the core network device is a DC server providing services for the first terminal device, the application server is an application server providing services for the first terminal device; and if the core network device is a DC Server providing services for the second terminal device, the application server is an application server providing services for the second terminal device.

The core network device may be further divided into the following two entities:
DC control entity: is an entity that provides a control function for data channels, which may also be referred to as a data channel service control-plane entity (Data Channel Service Control, DCS-C) and a data channel server (Data Channel Server, DChS), a data channel control function (Data Channel Control Function, DCCF), a data channel signalling function (Data Channel Signalling Function, DCSF), or the like.

DC media entity: is an entity that provides a transmission function for data channels, which may also be referred to as a data channel service media (Data Channel Service Media, DCS-M), a data channel media function (Data Channel Media Function, DCMF), a multimedia resource function controller (Multimedia Resource Function Controller, MRFC), a multimedia resource function processor (Multimedia Resource Function Processor, MRFP), or the like.

The DC control entity and the DC media entity may also be other network elements with the same function or type, which is not limited in the embodiments of this application.

When the core network device is divided into two entities, the DC control entity generates a data channel application list. The bootstrap data channel is established between the terminal device and the DC control entity, or the bootstrap data channel is established between the terminal device and the DC media entity.

When the bootstrap data channel is established between the terminal device and the DC control entity, the terminal device may directly communicate with the DC control entity.

When the bootstrap data channel is established between the terminal device and the DC media entity, the communication between the terminal device and the DC control entity needs to be transferred through the DC media entity. In an example that the terminal device sends a message to the DC control entity, the terminal device sends a first message to the DC media entity via the bootstrap data channel, and the DC media entity forwards the first message to the DC control entity, or the DC media entity generates a second message based on the first message and sends the second message to the DC control entity.

In an embodiment of this application, an allow header of the second request message carries the first data channel capability information;
or
a supported header of the second request message carries the first data channel capability information;
   or
the second request message includes a first header, and the first header carries the first data channel capability information;
   or
the second request message includes first data channel attribute information, and the first data channel attribute information carries the first data channel capability information.

The first data channel attribute information is attribute information of the bootstrap data channel.

That is, carrying the first data channel capability information in the request message for establishing the bootstrap data channel (that is, the second request message) can be implemented in the following four schemes.

Scheme 1: The allow (Allow) header is enhanced to carry the first data channel capability information. For example, Allow: DC-capability: AR, AI, positioning (that is, the data channel capability information carried in the allow header includes: an AR communication capability, an AI capability, and a positioning capability).

Scheme 2: The supported (Supported) header is enhanced to carry the first data channel capability information. For example, Supported: DC-capability: AR, AI, positioning (that is, the data channel capability information carried in the supported header includes: an AR communication capability, an AI capability, and a positioning capability).

Scheme 3: A new first header is added to carry the first data channel capability information. For example, DC-capability: AR, AI, positioning (that is, the data channel capability information carried in the newly-added first header includes: an AR communication capability, an AI capability, and a positioning capability).

Scheme 4: The session description protocol (Session Description Protocol, SDP) is enhanced to carry the first data channel capability information.

For example:

```
m=application 52718 UDP/DTLS/SCTP webrtc-datachannel
          b=AS:500
          a-max-message-size:1024
          a=sctp-port:5000
          a=DC-Capability: AR, AI, positioning
          a=dcmap:10 subprotocol="http"
          
```

where, the line m indicates that a type of the media is data channel;
the line b indicates that a bandwidth corresponding to the data channel is 500kbps;
the line a indicates attribute information of the data channel, that is:
   a=max-message-size: 1024, indicating that a maximum value of messages that can be transferred by the data channel is 1024 bytes;
   a=sctp-port:5000, indicating that a port number corresponding to the data channel is 5000;
   a=DC-Capability: AR, AI, positioning, indicating that the data channel capability includes: an AR communication capability, an AI capability, and a positioning capability; and
   a=dcmap:10 subprotocol="http", indicating the APP of the data channel is downloaded from the local DC server (that is, a DC Server that provides services for the party initiating establishment of a bootstrap DC), and if a=dcmap:110 subprotocol="http", it indicates that the APP of the data channel is downloaded from a DC server that provides services for the other party; where 10 and 110 in the line a are stream IDs (stream ID), the stream ID is used to identify a DC, usually 0-999 are used to identify a bootstrap DC (bootstrap DC), and a number greater than or equal to 1000 is used to identify an application data channel (application DC).

In an embodiment of this application, the sending, by the core network device, a first request message to the first terminal device includes:
sending, by the core network device, a third request message to an application server, where the third request message is used to instruct the application server to send the first request message to the first terminal device; and
the receiving, by the core network device, the first data channel capability information sent by the first terminal device in response to the first request message includes:
   receiving, by the core network device, the first data channel capability information sent by the first terminal device through the application server.

It can be learned from the foregoing that the core network device may send a third request message to the application server, so that the application server may send a first request message to the first terminal device in response to the third request message; then the first terminal device may return the first data channel capability information to the application server in response to the first request message; and the application server forwards the first data channel capability information to the core network device after receiving the first data channel capability information.

The second request message may be an HTTP message.

In addition, it should be noted that the third request message may include one piece of clear indication information, where the indication information is used to instruct the application server to send the first request message to the first terminal device; or the third request message may include one piece of information, where the information is used by the application server to determine to send the first request message to the first terminal device.

In an embodiment of this application, the first request message includes a re-invite (re-Invite) request message or an option (Option) message. That is, the re-invite message or the option message may carry an indication for obtaining the first data channel capability information. Here, the indication for obtaining the first data channel capability information may be one piece of clear indication information, where the indication information is used to instruct the first terminal device to send the first data channel capability information; or the indication for obtaining the first data channel capability information may be one piece of information, where the information is used by the first terminal device to determine to send the first data channel capability information to the core network device.

In an embodiment of this application, the obtaining, by a core network device, second data channel capability information of a second terminal device includes:
receiving, by the core network device, the second data channel capability information sent by the second terminal device during establishment of a bootstrap data channel;
   or
receiving, by the core network device, the second data channel capability information sent by the second terminal device via a bootstrap data channel;
   or
sending, by the core network device, a fourth request message to the second terminal device, where the fourth request message is used to instruct the second terminal device to send the second data channel capability information; and
receiving, by the core network device, the second data channel capability information sent by the second terminal device in response to the fourth request message;
   or
obtaining, by the core network device, the second data channel capability information sent by the second terminal device during registration.

It can be learned from the foregoing that the second data channel capability information of the second terminal device may be transmitted to the core network device during the establishment of the bootstrap data channel, or may be transmitted to the core network device via the bootstrap data channel after the bootstrap data channel is established; or may be requested by the core network device from the second terminal device; or may be sent to the core network device during registration of the second terminal device.

The bootstrap data channel includes a bootstrap data channel between the first terminal device and the core network device, and a bootstrap data channel between the second terminal device and the core network device. The core network device receives the second data channel capability information sent by the second terminal device via the bootstrap data channel, that is, the core network device receives the second data channel capability information sent by the second terminal device via the bootstrap data channel between the second terminal device and the core network device.

For example, that the core network device receives the second data channel capability information sent by the second terminal device via the bootstrap data channel between the second terminal device and the core network device may include: the core network device sends an eighth request message (such as an HTTP message or a SIP message) to the second terminal device via the bootstrap data channel between the second terminal device and the core network device, and the eighth request message is used to instruct the second terminal device to send the second data channel capability information; and the core network device receives the second data channel capability information sent by the second terminal device via the bootstrap data channel between the second terminal device and the core network device.

In addition, it should be noted that the fourth request message may include one piece of clear indication information, where the indication information is used to instruct the second terminal device to send the second data channel capability information; or the fourth request message may include one piece of information, where the information is used by the second terminal device to determine the second data channel capability information to be sent to the core network device.

Similarly, it should be noted that the eighth request message may include one piece of clear indication information, where the indication information is used to instruct the second terminal device to send the second data channel capability information; or the eighth request message may include one piece of information, where the information is used by the second terminal device to determine the second data channel capability information to be sent to the core network device.

In an embodiment of this application, the receiving, by the core network device, the second data channel capability information sent by the second terminal device in a process of establishing a bootstrap data channel includes:
receiving, by the core network device, a target response message;
   or
receiving, by the core network device, the second data channel capability information sent by an application server in response to a target response message; where
the target response message is a response message for establishing the bootstrap data channel during establishment of the bootstrap data channel, and the target response message carries the second data channel capability information.

It can be learned from the foregoing that the second data channel capability information may be carried in a response message for establishing a bootstrap data channel (that is, the target response message) and sent to the core network device by the second terminal device; or the second terminal device sends it to an application server, and then the application server sends the second data channel capability information to the core network device.

It should be noted here that if the core network device is a DC server providing services for the first terminal device, the application server is an application server providing services for the first terminal device; and if the core network device is a DC Server providing services for the second terminal device, the application server is an application server providing services for the second terminal device.

In an embodiment of this application, an allow header of the target response message carries the second data channel capability information;
or
a supported header of the target response message carries the second data channel capability information;
   or
the target response message includes a second header, and the second header carries the second data channel capability information;
   or
the target response message includes second data channel attribute information, and the second data channel attribute information carries the second data channel capability information.

The second data channel attribute information is attribute information of the bootstrap data channel.

In addition, to distinguish between attribute information of the bootstrap data channel carrying the first data channel capability information and attribute information of the bootstrap data channel carrying the second data channel capability information, in this embodiment of this application, the attribute information of the bootstrap data channel carrying the first data channel capability information is called "first data channel attribute information" and the attribute information of the bootstrap data channel carrying the second data channel capability information is called "second data channel attribute information".

It can be learned from the foregoing that carrying the second data channel capability information in the response message for establishing the bootstrap data channel (that is, the target response message) can be implemented in the following four schemes.

Scheme 1: The allow header is enhanced to carry the second data channel capability information. For example, Allow: DC-capability: AR, AI, positioning (that is, the data channel capability information carried in the allow header includes: an AR communication capability, an AI capability, and a positioning capability).

Scheme 2: The supported header is enhanced to carry the second data channel capability information. For example, Supported: DC-capability: AR, AI, positioning (that is, the data channel capability information carried in the supported header includes: an AR communication capability, an AI capability, and a positioning capability).

Scheme 3: A new second header is added to carry the second data channel capability information. For example, DC-capability: AR, AI, positioning (that is, the data channel capability information carried in the newly-added second header includes: an AR communication capability, an AI capability, and a positioning capability).

Scheme 4: An SDP is enhanced to carry the second data channel capability information.

For example:

```
          m=application 52718 UDP/DTLS/SCTP webrtc-datachannel
          b=AS:500
          a-max-message-size:1024
          a=sctp-port:5000
          a=DC-Capability: AR, AI, positioning
          a=dcmap:10 subprotocol="http"
          
```

where, the line m indicates that a type of the media is data channel;
the line b indicates that a bandwidth corresponding to the data channel is 500kbps;
the line a indicates attribute information of the data channel, that is:
   a=max-message-size:1024, indicating that a maximum value of messages that can be transferred by the data channel is 1024 bytes;
   a=sctp-port:5000, indicating that a port number corresponding to the data channel is 5000;
   a=DC-Capability: AR, AI, positioning, indicating that the data channel capability includes: an AR communication capability, an AI capability, and a positioning capability; and
   a=dcmap:10 subprotocol="http", indicating the APP of the data channel is downloaded from the local DC server (that is, a DC Server that provides services for the party initiating establishment of a bootstrap DC), and if a=dcmap:110 subprotocol="http", it indicates that the APP of the data channel is downloaded from a DC server that provides services for the other party; where 10 and 110 in the line a are stream IDs (stream ID), the stream ID is used to identify a DC, usually 0-999 are used to identify a bootstrap DC (bootstrap DC), and a number greater than or equal to 1000 is used to identify an application data channel (application DC).

In an embodiment of this application, the sending, by the core network device, a fourth request message to the second terminal device includes:
sending, by the core network device, a fifth request message to an application server, where the fifth request message is used to instruct the application server to send the fourth request message to the second terminal device; and
the receiving, by the core network device, the second data channel capability information sent by the second terminal device in response to the fourth request message includes:
   receiving, by the core network device, the second data channel capability information sent by the second terminal device through the application server.

It can be learned from the foregoing that the core network device may send a fifth request message to the application server, so that the application server may send a fourth request message to the second terminal device in response to the fifth request message; then the second terminal device may return the second data channel capability information to the application server in response to the fourth request message; and the application server forwards the second data channel capability information to the core network device after receiving the second data channel capability information.

The fifth request message may be an HTTP message.

In addition, it should be noted that the fifth request message may include one piece of clear indication information, where the indication information is used to instruct the application server to send the fourth request message to the second terminal device; or the fifth request message may include one piece of information, where the information is used by the application server to determine to send the fourth request message to the second terminal device.

In an embodiment of this application, the fourth request message includes a re-invite (re-Invite) message or an option (Option) message. That is, the re-invite message or the option message may carry an indication for obtaining the second data channel capability information. Here, the indication for obtaining the second data channel capability information may be one piece of clear indication information, where the indication information is used to instruct the second terminal device to send the second data channel capability information; or the indication for obtaining the second data channel capability information may be one piece of information, where the information is used by the second terminal device to determine to send the second data channel capability information to the core network device.

In an embodiment of this application, the method further includes:
sending, by the core network device, the first data channel capability information to the second terminal device.

After receiving the first data channel capability information, the second terminal device may feed back the data channel capability supported by itself to the core network device based on a status of supporting the data channel capability by the first terminal device indicated by the first data channel capability information.

In an embodiment of this application, the second data channel capability information includes at least one data channel capability in an intersection of a data channel capability supported by the second terminal device and a data channel capability supported by the first terminal device and indicated by the first data channel capability information.

It can be learned from the foregoing that in an embodiment of this application, the core network device may alternatively send the first data channel capability information of the first terminal device to the second terminal device, so that the second terminal device may select a data channel capability supported by the second terminal device from data channel capabilities supported by the first terminal device, and send at least one selected data channel capability to the core network device.

In an embodiment of this application, the sending, by the core network device, the first data channel capability information to the second terminal device includes:
sending, by the core network device, a sixth request message to an application server, where the sixth request message is used to instruct the application server to send the first data channel capability information to the second terminal device.

That is, the core network device may forward the first data channel capability information to the second terminal device through the application server.

It should be noted here that the sixth request message may include one piece of clear indication information, where the indication information is used to instruct the application server to send the first data channel capability information to the second terminal device; or the sixth request message may include one piece of information, where the information is used by the application server to determine to send the first data channel capability information to the second terminal device.

In an embodiment of this application, the data channel application list includes information of data channel applications supported by both the first terminal device and the second terminal device.

Here, when the first terminal device and the second terminal device both support the data channel function, any one of the first terminal device and the second terminal device may initiate establishment of the data channel. In this case, the data channel application list generated by the core network device based on the first data channel capability information and the second data channel capability information may include information of data channel applications supported by both the first terminal device and the second terminal device.

In an embodiment of this application, the data channel application list includes information of applications supported by the second terminal device and meeting a first preset condition, where the first preset condition includes that the core network device is capable of processing data of data channel applications into data recognizable by the first terminal device.

Here, in a case that the second terminal device supports the data channel function and the second terminal device initiates establishment of the data channel, the data channel application list generated by the core network device based on the first data channel capability information and the second data channel capability information may include information of applications supported by the second terminal device and meeting the first preset condition.

It should be noted that the "core network device" in "the first preset condition includes that the core network device is capable of processing the data of the data channel applications into the data recognizable by the first terminal device" may be the core network device described above (that is, the core network device that obtains the first data channel capability information and the second data channel capability information and generates the data channel application list). In this case, if the core network device includes two devices (namely, a DC control entity and a DC media entity), the DC media entity "processes the data of the data channel applications into the data recognizable by the first terminal device".

Alternatively, the "core network device" in "the first preset condition includes that the core network device is capable of processing the data of the data channel applications into the data recognizable by the first terminal device" may be other core network devices, for example, an augmented reality media (Augmented Reality, AR-M) device. The AR-M device may convert the AR media into the real-time transport protocol (Real-time Transport Protocol, RTP) media.

In an embodiment of this application, the data channel application list includes information of applications supported by the first terminal device and meeting a second preset condition, where the second preset condition includes that the core network device is capable of processing data of data channel applications into data recognizable by the second terminal device.

Here, in a case that the first terminal device supports the data channel function and the first terminal device initiates establishment of the data channel, the data channel application list generated by the core network device based on the first data channel capability information and the second data channel capability information may include information of applications supported by the first terminal device and meeting the second preset condition.

It should be noted that the "core network device" in "the second preset condition includes that the core network device is capable of processing the data of the data channel applications into the data recognizable by the second terminal device" may be the core network device described above (that is, the core network device that obtains the first data channel capability information and the second data channel capability information and generates the data channel application list). In this case, if the core network device includes two devices (namely, a DC control entity and a DC media entity), the DC media entity "processes the data of the data channel applications into the data recognizable by the second terminal device".

Alternatively, the "core network device" in "the second preset condition includes that the core network device is capable of processing the data of the data channel applications into the data recognizable by the second terminal device" may be other core network devices, such as an AR-M device. The AR-M device may convert the AR media into the RTP media.

In addition, in an embodiment of this application, the core network device supports processing the data of the data channel applications into data recognizable by the other party, which may also be referred to as that the core network supports interaction (interaction) or interworking (interworking).

It can be learned from the foregoing that the specific content included in the data channel application list may have a plurality of cases described above.

In an embodiment of this application, the sending, by the core network device, a data channel application list to at least one of the first terminal device and the second terminal device includes:
in a case that the first terminal device supports a data channel function and the second terminal device supports the data channel function, sending, by the core network device, the data channel application list to the first terminal device and the second terminal device; or
in a case that the first terminal device does not support a data channel function and the second terminal device supports the data channel function, sending, by the core network device, the data channel application list to the second terminal device; or
in a case that the first terminal device supports a data channel function and the second terminal device does not support the data channel function, sending, by the core network device, the data channel application list to the first terminal device.

That "the first terminal device does not support the data channel function" may mean that the core network device determines, based on the first data channel capability information of the first terminal device, that the first terminal device does not support the data channel function; or when the core network device cannot determine whether the first terminal device supports the data channel function (for example, the first data channel capability information is not received, or the core network device does not interact with the first terminal device), it may be considered that the first terminal device does not support the data channel function.

That "the second terminal device does not support the data channel function" may mean that the core network device determines, based on the second data channel capability information of the second terminal device, that the second terminal device does not support the data channel function; or when the core network device cannot determine whether the second terminal device supports the data channel function (for example, the second data channel capability information is not received, or the core network device does not interact with the second terminal device), it may be considered that the second terminal device does not support the data channel function.

It can be learned from the foregoing that when two communication parties support the data channel function, the data channel application list needs to be sent to both parties, and when one party does not support the data channel function, the data channel application list may need to be sent only to the party that supports the data channel function.

It should be noted that the content included in the data channel application list may have a plurality of cases described above. Here, different cases of the content included in the data channel application list are combined with a plurality of cases of sending the data channel application list, for detailed description.

In a first aspect, when two communication parties support the data channel function, a data channel application list supported by both communication parties may be generated based on their data channel capability information, so that a data channel application that the two communication parties select from this list for download is supported by both parties, thus avoiding a failure in data channel establishment.

In a second aspect, when one of the two communication parties does not support the data channel function, the core network device may process the data sent by the other party into data recognizable; or, both communication parties support the data channel function, and one party may still download a data channel application supported by the one party and not supported by the other party, and whose data can be processed by the core network device into data recognizable by the other party. For example, the first terminal device supports a data channel application of screen sharing, and the second terminal device does not support the data channel function; or the second terminal device does not support the data channel application of screen sharing, the first terminal device may still download the data channel application of screen sharing, so that the core network device may process screen sharing content of the first terminal device into content recognizable by the second terminal device. For example, the core network device converts the data of screen sharing sent by the first terminal device through the data channel into video, and sends it to the second terminal device for display.

It should be noted that the terminal device initiating establishment of the data channel needs to support the data channel function.

Therefore, based on the content in the first aspect and the second aspect here, the following conclusion may be obtained.

For ease of description, the following definitions are made:
first list: includes information of data channel applications supported by both the first terminal device and the second terminal device;
second list: includes information of applications supported by the first terminal device and meeting the second preset condition (that is, the core network device may process data of data channel applications into data recognizable by the second terminal device); and
third list: includes information of applications supported by the second terminal device and meeting the first preset condition (that is, the core network device may process data of data channel applications into data recognizable by the first terminal device).

Conclusion 1: When the first terminal device supports the data channel function and the second terminal device supports the data channel function, the generated data channel application list may include the first list, so that the first list may be sent to the first terminal device and the second terminal device. In this way, both the first terminal device and the second terminal device may select from the first list and download a same data channel application supported by both of them, so as to establish a data channel through the downloaded data channel application;
Alternatively, the generated data channel application list may include the first list and the second list, so as to send the first list and the second list to the first terminal device and send the first list to the second terminal device. In this way, both the first terminal device and the second terminal device may select from the first list and download a same data channel application supported by both of them, so as to establish a data channel through the downloaded data channel application; or only the first terminal device downloads a data channel application supported by the first terminal device from the second list, so as to establish a data channel between the first terminal device and the core network device through the data channel application, and then send the data of the first terminal device to the core network device through the channel so that the core network device processes it into data recognizable by the second terminal device and then sends it to the second terminal device.

Alternatively, the generated data channel application list may include the first list and the third list, so as to send the first list and the third list to the second terminal device and send the first list to the first terminal device; or the generated data channel application list may include the second list and the third list, so as to send the second list to the first terminal device and send the third list to the second terminal device. In this way, both the first terminal device and the second terminal device may select from the first list and download a same data channel application supported by both of them, so as to establish a data channel through the downloaded data channel application; or only the second terminal device downloads a data channel application supported by itself from the third list, so as to establish a data channel between the second terminal device and the core network device through the data channel application, and then send the data of the second terminal device to the core network device through the channel so that the core network device processes it into data recognizable by the first terminal device and then sends it to the first terminal device.

Conclusion 2: When the first terminal device supports the data channel function and the second terminal device does not support the data channel function, the generated data channel application list may include the second list, so as to send the second list to the first terminal device in a case that the first terminal device initiates establishment of the data channel. In this way, the first terminal device may download a data channel application supported by itself from the second list, so as to establish a data channel between the first terminal device and the core network device through the data channel application and then send the data of the first terminal device to the core network device through the channel, so that the core network device processes it into data recognizable by the second terminal device and then sends it to the second terminal device.

Conclusion 3: When the first terminal device does not support the data channel function and the second terminal device supports the data channel function, the generated data channel application list may include the third list, so as to send the third list to the second terminal device in a case that the second terminal device initiates establishment of the data channel. In this way, the second terminal device may download a data channel application supported by itself from the third list, so as to establish a data channel between the second terminal device and the core network device through the data channel application and then send the data of the second terminal device to the core network device through the channel, so that the core network device processes it into data recognizable by the first terminal device and then sends it to the first terminal device.

In an embodiment of this application, the method further includes:
sending, by the core network device, first indication information to the first terminal device, where the first indication information is used to indicate a data channel application supported by the first terminal device but not supported by the second terminal device, or the first indication information is used to indicate a data channel application supported by the first terminal device and supported by the second terminal device;
   or
sending, by the core network device, second indication information to the second terminal device, where the second indication information is used to indicate a data channel application supported by the second terminal device but not supported by the first terminal device, or the second indication information is used to indicate a data channel application supported by the first terminal device and supported by the second terminal device;

The first indication information may include a data channel application list supported by the first terminal device and not supported by the second terminal device, or a data channel application list supported by both the first terminal device and the second terminal device. Alternatively, the core network device may separately indicate, to the first terminal device, each data channel application not supported by the second terminal device, so that the first terminal device can distinguish which one of data channel applications supported by the first terminal device is not supported by the second terminal device.

For example, the data channel applications supported by the first terminal device and not supported by the second terminal device are in a separate list, and the core network device informs the first terminal device that the list is a data channel application list supported by the first terminal device and not supported by the second terminal device. Alternatively, each data channel application supported by the second terminal device has a separate indication, for example, 1 indicates being supported by both parties, and 0 indicates being supported only by the second terminal.

Similarly, the second indication information may include a data channel application list supported by the second terminal device and not supported by the first terminal device, or a data channel application list supported by both the first terminal device and the second terminal device. Alternatively, the core network device may separately indicate, to the second terminal device, each data channel application not supported by the first terminal device, so that the second terminal device can distinguish which one of data channel applications supported by the second terminal device is not supported by the first terminal device.

For example, the data channel applications supported by the second terminal device and not supported by the first terminal device are in a separate list, and the core network device informs the second terminal device that the list is a data channel application list supported by the second terminal device and not supported by the first terminal device. Alternatively, each data channel application supported by the first terminal device has a separate indication, for example, 1 indicates being supported by both parties, and 0 indicates being supported only by the first terminal.

After determining which one of data channel applications supported by the first terminal device is a data channel application not supported by the second terminal device, the first terminal device may display information of the applications to the user, so that the user may know which ones for interaction with the second terminal device and which ones not for interaction with the second terminal device. Similarly, after determining which one of data channel applications supported by the second terminal device is a data channel application not supported by the first terminal device, the second terminal device may display information of the applications to the user, so that the user may know which ones for interaction with the first terminal device and which ones not for interaction with the first terminal device.

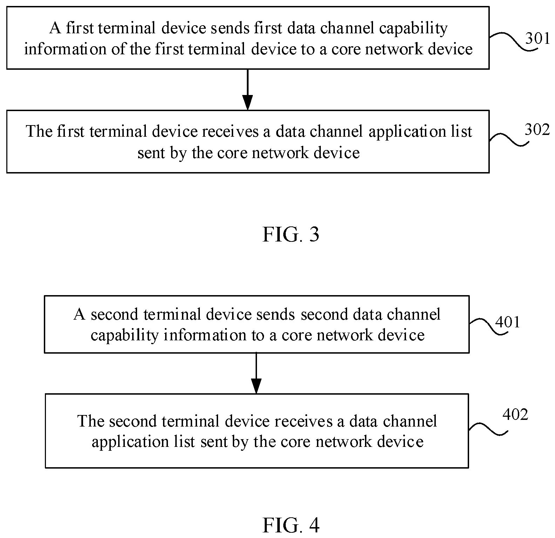

In a second aspect, as shown in FIG. 3, FIG. 3 is a flowchart of a method for processing a data channel application list according to an embodiment of this application, and the method may include the following steps.

Step 301: A first terminal device sends first data channel capability information of the first terminal device to a core network device.

Step 302: The first terminal device receives a data channel application list sent by the core network device.

The data channel application list is generated by the core network device based on the first data channel capability information and second data channel capability information, and the second data channel capability information is data channel capability information of a second terminal device.

The first terminal device and the second terminal device are devices of two communication parties, which, for example, may be devices of call parties (that is, a calling party device and a called party device). The core network device may be a data channel server (DC Server) that provides services for the first terminal device or a DC Server that provides services for the second terminal device.

The data channel capability information includes at least one of the following:
a video codec (video codec) capability;
an artificial intelligence capability (Artificial Intelligence capability);
a positioning capability (positioning capability);
an augmented reality communication capability (Augmented Reality communication capability);
a screen sharing capability (Screen Sharing); and
a white board capability (white board).

In an embodiment of this application, the method further includes:
the first terminal device sends first target information to the core network device, where the first target information includes at least one of subscription information and other capability information than the first data channel capability information in capability information of the first terminal device; and
the data channel application list is generated by the core network device based on the first data channel capability information, the second data channel capability information, the first target information, and second target information, and the second target information includes at least one of subscription information and other capability information than the second data channel capability information in capability information of the second terminal device.

The first target information may include at least one of a screen display capability, a data processing capability, and a computing capability of the first terminal device; and the second target capability information may include at least one of a screen display capability, a data processing capability, and a computing capability of the second terminal device.

It can be learned from the foregoing that the core network device may further generate a data channel application list based on other capabilities (such as a screen display capability, a data processing capability, and a computing capability) in addition to generating a data channel application list based on the data channel capabilities of the two terminal devices; or may generate a data channel application list based on the subscription information, for example, if AR communication requires extra payment, only a terminal device that has subscribed to use of the AR communication service can download an AR application; or may generate a data channel application list based on other capability information and contract information.

It can be learned based on the steps 301 to 302 that, in this embodiment of this application, the core network device may obtain the first data channel capability information of the first terminal device and the second data channel capability information of the second terminal device, so as to generate a data channel application list based on the first data channel capability information and the second data channel capability information. It can be learned from the foregoing that in this embodiment of this application, the core network device may generate, based on data channel capabilities of two communication parties, a data channel application list conforming to an actual status of supporting data channel applications by the two communication parties, so as to provide accurate data support for the two communication parties to download data channel applications, thereby reducing a probability of downloading, by the two communication parties based on the data channel application list, a data channel application not supported by the other party, and further reducing a probability of data channel establishment failure and saving resources and time.

In an embodiment of this application, the sending, by a first terminal device, first data channel capability information of the first terminal device to a core network device includes:
sending, by the first terminal device, the first data channel capability information to the core network device during establishment of a bootstrap data channel;
   or
sending, by the first terminal device, the first data channel capability information to the core network device via a bootstrap data channel;
   or
receiving, by the first terminal device, a first request message sent by the core network device, where the first request message is used to instruct the first terminal device to send the first data channel capability information; and
sending, by the first terminal device, the first data channel capability information to the core network device in response to the first request message;
   or
sending, by the first terminal device, the first data channel capability information to the core network device during registration.

It can be learned from the foregoing that the first data channel capability information of the first terminal device may be transmitted to the core network device during the establishment of the bootstrap data channel, or may be transmitted to the core network device via the bootstrap data channel after the bootstrap data channel is established; or may be requested by the core network device from the first terminal device; or may be sent to the core network device during registration of the first terminal device.

It should be noted that the first request message may include one piece of clear indication information, where the indication information is used to instruct the first terminal device to send the first data channel capability information; or the first request message may include one piece of information, where the information is used by the first terminal device to determine the first data channel capability information to be sent to the core network device.

In an embodiment of this application, the sending, by the first terminal device, the first data channel capability information to the core network device during establishment of a bootstrap data channel includes:
sending, by the first terminal device, a second request message to the core network device;
   or
sending, by the first terminal device, a second request message to an application server; where
the second request message is a request message for establishing the bootstrap data channel during establishment of the bootstrap data channel, and the second request message carries the first data channel capability information.

It can be learned from the foregoing that the first data channel capability information may be carried in a request message for establishing a bootstrap data channel (that is, the second request message) and sent to the core network device by the first terminal device; or the first terminal device sends it to an application server, and then the application server sends the first data channel capability information to the core network device.

In an embodiment of this disclosure, an allow header of the second request message carries the first data channel capability information;
or
a supported header of the second request message carries the first data channel capability information;
   or
the second request message includes a first header determined in advance, and the first header carries the first data channel capability information;
   or
the second request message includes first data channel attribute information, and the first data channel attribute information carries the first data channel capability information.

That is, carrying the first data channel capability information in the request message for establishing the bootstrap data channel (that is, the second request message) can be implemented in the following four schemes.

Scheme 1: The allow (Allow) header is enhanced to carry the first data channel capability information.

Scheme 2: The supported (Supported) header is enhanced to carry the first data channel capability information.

Scheme 3: A new first header is added to carry the first data channel capability information.

Scheme 4: The session description protocol (Session Description Protocol, SDP) is enhanced to carry the first data channel capability information.

For examples of the schemes 1 to 4 here, refer to the foregoing description, which is not repeated herein.

In an embodiment of this application, the receiving, by the first terminal device, a first request message sent by the core network device includes:
receiving, by the first terminal device, the first request message sent by an application server in response to a third request message, where the third request message is used to instruct the application server to send the first request message to the first terminal device; and
the sending, by the first terminal device, the first data channel capability information to the core network device in response to the first request message includes:
   sending, by the first terminal device, the first data channel capability information to the core network device through the application server in response to the first request message.

It can be learned from the foregoing that the core network device may send a third request message to the application server, so that the application server may send a first request message to the first terminal device in response to the third request message; then the first terminal device may return the first data channel capability information to the application server in response to the first request message; and the application server forwards the first data channel capability information to the core network device after receiving the first data channel capability information.

The second request message may be an HTTP message.

In addition, it should be noted that the third request message may include one piece of clear indication information, where the indication information is used to instruct the application server to send the first request message to the first terminal device; or the third request message may include one piece of information, where the information is used by the application server to determine to send the first request message to the first terminal device.

In an embodiment of this application, the first request message includes a re-invite (re-Invite) message or an option (Option) message. That is, the re-invite message or the option message may carry an indication for obtaining the first data channel capability information. Here, the indication for obtaining the first data channel capability information may be one piece of clear indication information, where the indication information is used to instruct the first terminal device to send the first data channel capability information; or the indication for obtaining the first data channel capability information may be one piece of information, where the information is used by the first terminal device to determine to send the first data channel capability information to the core network device.

In an embodiment of this application, the method further includes:
receiving, by the first terminal device, first indication information sent by the core network device, where the first indication information is used to indicate a data channel application supported by the first terminal device but not supported by the second terminal device, or the first indication information is used to indicate a data channel application supported by the first terminal device and supported by the second terminal device.

The first indication information may include a data channel application list supported by the first terminal device and not supported by the second terminal device, or a data channel application list supported by both the first terminal device and the second terminal device. Alternatively, the core network device may separately indicate, to the first terminal device, each data channel application not supported by the second terminal device, so that the first terminal device can distinguish which one of data channel applications supported by the first terminal device is not supported by the second terminal device.

For example, the data channel applications supported by the first terminal device and not supported by the second terminal device are in a separate list, and the core network device informs the first terminal device that the list is a data channel application list supported by the first terminal device and not supported by the second terminal device. Alternatively, each data channel application supported by the second terminal device has a separate indication, for example, 1 indicates being supported by both parties, and 0 indicates being supported only by the second terminal.

After determining which one of data channel applications supported by the first terminal device is a data channel application not supported by the second terminal device, the first terminal device may display information of the applications to the user, so that the user may know which ones for interaction with the second terminal device and which ones not for interaction with the second terminal device.

In a third aspect, as shown in FIG. 4, FIG. 4 is a flowchart of a method for processing a data channel application list according to an embodiment of this application, and the method may include the following steps.

Step 401: A second terminal device sends second data channel capability information to a core network device.

Step 402: The second terminal device receives a data channel application list sent by the core network device.

The data channel application list is generated by the core network device based on first data channel capability information and the second data channel capability information, and the first data channel capability information is data channel capability information of the first terminal device.

The first terminal device and the second terminal device are devices of two communication parties, which, for example, may be devices of call parties (that is, a calling party device and a called party device). The core network device may be a data channel server (DC Server) that provides services for the first terminal device or a DC Server that provides services for the second terminal device.

The data channel capability information includes at least one of the following:
a video codec (video codec) capability;
an artificial intelligence capability (Artificial Intelligence capability);
a positioning capability (positioning capability);
an augmented reality communication capability (Augmented Reality communication capability);
a screen sharing capability (Screen Sharing); and
a white board capability (white board).

In an embodiment of this application, the method further includes:
the second terminal device sends second target information to the core network device, where the second target information includes at least one of subscription information and other capability information than the second data channel capability information in capability information of the second terminal device; and
the data channel application list is generated by the core network device based on the first data channel capability information, the second data channel capability information, first target information, and the second target information, and the first target information includes at least one of subscription information and other capability information than the first data channel capability information in capability information of the first terminal device.

The first target information may include at least one of a screen display capability, a data processing capability, and a computing capability of the first terminal device; and the second target capability information may include at least one of a screen display capability, a data processing capability, and a computing capability of the second terminal device.

It can be learned from the foregoing that the core network device may further generate a data channel application list based on other capabilities (such as a screen display capability, a data processing capability, and a computing capability) in addition to generating a data channel application list based on the data channel capabilities of the two terminal devices; or may generate a data channel application list based on the subscription information, for example, if AR communication requires extra payment, only a terminal device that has subscribed to use of the AR communication service can download an AR application; or may generate a data channel application list based on other capability information and contract information.

It can be learned based on the steps 401 and 402 that, in this embodiment of this application, the core network device may obtain the first data channel capability information of the first terminal device and the second data channel capability information of the second terminal device, so as to generate a data channel application list based on the first data channel capability information and the second data channel capability information. It can be learned from the foregoing that in this embodiment of this application, the core network device may generate, based on data channel capabilities of two communication parties, a data channel application list conforming to an actual status of supporting data channel applications by the two communication parties, so as to provide accurate data support for the two communication parties to download data channel applications, thereby reducing a probability of downloading, by the two communication parties based on the data channel application list, a data channel application not supported by the other party, and further reducing a probability of data channel establishment failure and saving resources and time.

In an embodiment of this application, the sending, by a second terminal device, second data channel capability information of the second terminal device to a core network device includes:
sending, by the second terminal device, the second data channel capability information to the core network device during establishment of a bootstrap data channel;
   or
sending, by the second terminal device, the second data channel capability information to the core network device via a bootstrap data channel;
   or
receiving, by the second terminal device, a fourth request message sent by the core network device, where the fourth request message is used to instruct the second terminal device to send the second data channel capability information; and
sending, by the second terminal device, the second data channel capability information to the core network device in response to the fourth request message;
   or
sending, by the second terminal device, the second data channel capability information to the core network device during registration.

It can be learned from the foregoing that the second data channel capability information of the second terminal device may be transmitted to the core network device during the establishment of the bootstrap data channel, or may be transmitted to the core network device via the bootstrap data channel after the bootstrap data channel is established; or may be requested by the core network device from the second terminal device; or may be sent to the core network device during registration of the second terminal device.

Similarly, it should be noted that the fourth request message may include one piece of clear indication information, where the indication information is used to instruct the second terminal device to send the second data channel capability information; or the fourth request message may include one piece of information, where the information is used by the second terminal device to determine the second data channel capability information to be sent to the core network device.

In an embodiment of this disclosure, the sending, by the second terminal device, the second data channel capability information to the core network device during establishment of a bootstrap data channel includes:
sending, by the second terminal device, a target response message to the core network device;
   or
sending, by the second terminal device, a target response message to an application server; where
the target response message is a response message for establishing the bootstrap data channel during establishment of the bootstrap data channel, and the target response message carries the second data channel capability information.

It can be learned from the foregoing that the second data channel capability information may be carried in a response message for establishing a bootstrap data channel (that is, the target response message) and sent to the core network device by the second terminal device; or the second terminal device sends it to an application server, and then the application server sends the second data channel capability information to the core network device.

In an embodiment of this application, an allow header of the target response message carries the second data channel capability information;
or
a supported header of the target response message carries the second data channel capability information;
   or
the target response message includes a second header determined in advance, and the second header carries the second data channel capability information;
   or
the target response message includes second data channel attribute information, and the second data channel attribute information carries the second data channel capability information.

It can be learned from the foregoing that carrying the second data channel capability information in the response message for establishing the bootstrap data channel (that is, the target response message) can be implemented in the following four schemes.

Scheme 1: The allow header is enhanced to carry the second data channel capability information.

Scheme 2: The supported header is enhanced to carry the second data channel capability information.

Scheme 3: A new second header is added to carry the second data channel capability information.

Scheme 4: An SDP is enhanced to carry the second data channel capability information.

For examples of the schemes 1 to 4 here, refer to the foregoing description, which is not repeated herein.

In an embodiment of this disclosure, the receiving, by the second terminal device, a fourth request message sent by the core network device includes:
receiving, by the second terminal device, the fourth request message sent by an application server in response to a fifth request message, where the fifth request message is used to instruct the application server to send the fourth request message to the second terminal device; and
the sending, by the second terminal device, the second data channel capability information to the core network device in response to the fourth request message includes:
   sending, by the second terminal device, the second data channel capability information to the core network device through the application server in response to the fourth request message.

It can be learned from the foregoing that the core network device may send a fifth request message to the application server, so that the application server may send a fourth request message to the second terminal device in response to the fifth request message; then the second terminal device may return the second data channel capability information to the application server in response to the fourth request message; and the application server forwards the second data channel capability information to the core network device after receiving the second data channel capability information.

The fifth request message may be an HTTP message.

In addition, it should be noted that the fifth request message may include one piece of clear indication information, where the indication information is used to instruct the application server to send the fourth request message to the second terminal device; or the fifth request message may include one piece of information, where the information is used by the application server to determine to send the fourth request message to the second terminal device.

In an embodiment of this application, the fourth request message includes a re-invite (re-Invite) message or an option (Option) message. That is, the re-invite message or the option message may carry an indication for obtaining the second data channel capability information. Here, the indication for obtaining the second data channel capability information may be one piece of clear indication information, where the indication information is used to instruct the second terminal device to send the second data channel capability information; or the indication for obtaining the second data channel capability information may be one piece of information, where the information is used by the second terminal device to determine to send the second data channel capability information to the core network device.

In an embodiment of this application, the method further includes:
receiving, by the second terminal device, the first data channel capability information sent by the core network device.

It can be learned from the foregoing that in an embodiment of this application, the core network device may alternatively send the first data channel capability information of the first terminal device to the second terminal device, so that the second terminal device may select a data channel capability supported by the second terminal device from data channel capabilities supported by the first terminal device, and send at least one selected data channel capability to the core network device.

In an embodiment of this application, the second data channel capability information includes at least one data channel capability in an intersection of a data channel capability supported by the second terminal device and a data channel capability supported by the first terminal device and indicated by the first data channel capability information.

It can be learned from the foregoing that in an embodiment of this application, the core network device may alternatively send the first data channel capability information of the first terminal device to the second terminal device, so that the second terminal device may select a data channel capability supported by the second terminal device from data channel capabilities supported by the first terminal device, and send at least one selected data channel capability to the core network device.

In an embodiment of this application, the receiving, by the second terminal device, the first data channel capability information sent by the core network device includes:
receiving, by the second terminal device, the first data channel capability information sent by an application server in response to a sixth request message, where the sixth request message is used to instruct the application server to send the first data channel capability information to the second terminal device.

That is, the core network device may forward the first data channel capability information to the second terminal device through the application server.

It should be noted here that the sixth request message may include one piece of clear indication information, where the indication information is used to instruct the application server to send the first data channel capability information to the second terminal device; or the sixth request message may include one piece of information, where the information is used by the application server to determine to send the first data channel capability information to the second terminal device.

In an embodiment of this application, the method further includes:
receiving, by the second terminal device, second indication information sent by the core network device, where the second indication information is used to indicate a data channel application supported by the second terminal device but not supported by the first terminal device, or the second indication information is used to indicate a data channel application supported by the first terminal device and supported by the second terminal device.

The second indication information may include a data channel application list supported by the second terminal device and not supported by the first terminal device, or a data channel application list supported by both the first terminal device and the second terminal device. Alternatively, the core network device may separately indicate, to the second terminal device, each data channel application not supported by the first terminal device, so that the second terminal device can distinguish which one of data channel applications supported by the second terminal device is not supported by the first terminal device.

For example, the data channel applications supported by the second terminal device and not supported by the first terminal device are in a separate list, and the core network device informs the second terminal device that the list is a data channel application list supported by the second terminal device and not supported by the first terminal device. Alternatively, each data channel application supported by the first terminal device has a separate indication, for example, 1 indicates being supported by both parties, and 0 indicates being supported only by the first terminal. After determining which one of data channel applications supported by the second terminal device is a data channel application not supported by the first terminal device, the second terminal device may display information of the applications to the user, so that the user may know which ones for interaction with the first terminal device and which ones not for interaction with the first terminal device.

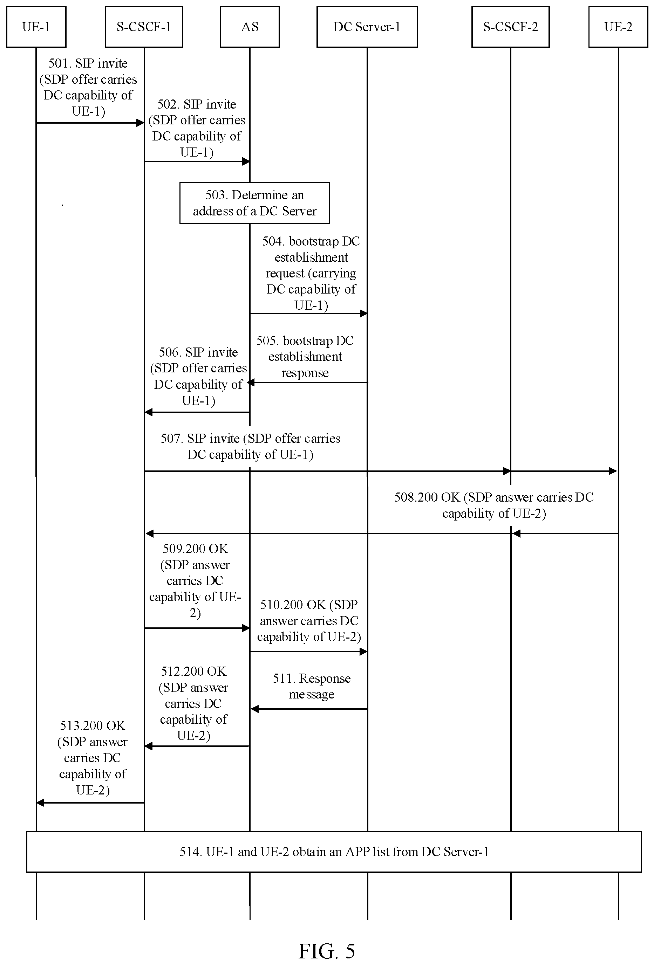

To sum up, one implementation of the method for processing a data channel application list in this embodiment of this application may be shown in FIG. 5, specifically as follows:
Step 501: UE-1 initiates a call request to UE-2 through a session initiation protocol invite (SIP invite) message, that is, UE-1 sends a SIP invite message to S-CSCF-1, where the S-CSCF-1 is a serving call session control function (Serving Call Session Control Function, S-CSCF) network element providing services for UE-1.

The SIP invite message carries a session description protocol offer (SDP offer), the SDP offer is used to describe media description information corresponding to this call, and the SDP offer includes description information of voice and description information for establishing a bootstrap DC (bootstrap DC).

In addition, a DC capability of UE-1 may be carried in a request message for establishing a bootstrap DC or an SIP message, for example, the following schemes 1 to 4:
Scheme 1: The allow header is enhanced to carry a DC capability, such as Allow: DC-capability: AR, AI, positioning.

Scheme 2: The supported header is enhanced to carry a DC capability, such as Supported: DC-capability: AR, AI, positioning.

Scheme 3: A new header is added to carry a DC capability, such as DC-Capability:AR, AI, positioning.

Scheme 4: The SDP is enhanced to carry a DC capability, for example:

```
          m=application 52718 UDP/DTLS/SCTP webrtc-datachannel
          b=AS:500
          a-max-message-size:1024
          a=sctp-port:5000
          a=DC-Capability: AR, AI, positioning
          a=dcmap:10 subprotocol="http"
```

where, the line m indicates that a type of the media is data channel;
the line b indicates that a bandwidth corresponding to the data channel is 500kbps;
the line a indicates attribute information of the data channel, that is:
   a=max-message-size:1024, indicating that a maximum value of messages that can be transferred by the data channel is 1024 bytes;
   a=sctp-port:5000, indicating that a port number corresponding to the data channel is 5000;
   a=DC-Capability: AR, AI, positioning, indicating that the data channel capability includes: an AR communication capability, an AI capability, and a positioning capability; and
   a=dcmap:10 subprotocol="http", indicating the APP of the data channel is downloaded from the local DC server, that is, a DC Server that provides services for UE-1 (that is, the local DC server), and if a=dcmap:110 subprotocol="http", it indicates that the APP of the data channel is downloaded from a DC server that provides services for UE-2 (that is, the peer DC server); where 10 and 110 in the line a are stream IDs, the stream ID is used to identify a DC, usually 0-999 are used to identify a bootstrap DC (bootstrap DC), and a number greater than or equal to 1000 is used to identify an application data channel (application DC).

The lines m, b, and a are description information of bootstrap DC included in the SDP offer.

Step 502: The S-CSCF-1 routes a SIP invite message to an application server (Application Server, AS) that provides services for UE-1.

Step 503: Based on content of SDP in the SIP invite message (that is, the content of the line a), the AS determines to use the DC Server (that is, DC Server-1) providing services for UE-1 to establish a bootstrap DC, and determines an address of the DC server.

The DC Server here may be divided into two network elements: a DC control entity and a DC media entity (for details, refer to the foregoing description), which are merged into one network element to simplify the description.

Step 504: The AS sends a bootstrap DC establishment request to DC Server-1, where the request carries a DC capability of UE-1.

Therefore, in step 504, the DC capability of UE-1 is transmitted to the DC Server-1.

Step 505: The DC server-1 sends a bootstrap DC establishment response message to the AS.

Step 506: The AS sends a SIP invite message to the S-CSCF-1, where the SIP invite message contains SDP information for establishing a bootstrap DC (that is, the bootstrap DC establishment response message in step 505, indicating that the DC Server-1 agrees to establish a bootstrap DC with UE-1).

Step 507: Based on an address of UE-2, the S-CSCF-1 forwards the SIP invite message to an S-CSCF-2 that provides a service for UE-2, and the SIP invite message is routed to UE-2.

The SIP invite message may carry the DC capability of UE-1 or may not carry the DC capability of UE-1.

Step 508: The UE-2 receives the SIP invite message, and returns to a 200 OK message, where the 200 OK message carries an SDP answer (answer), the SDP answer indicates that UE-2 agrees to establish a bootstrap DC with the DC Server-1, and "200 OK" indicates that the request is successful.

The UE-2 may alternatively return an SDP answer to the S-CSCF-2 using other response messages, such as 183,180 and other response messages.

In addition, a DC capability of UE-2 may be carried in the SDP answer, and a specific carrying manner may be described in the following schemes 1 to 4:
Scheme 1: The allow header is enhanced to carry a DC capability, such as Allow: DC-capability: AR, AI, positioning.

Scheme 2: The supported header is enhanced to carry a DC capability, such as Supported: DC-capability: AR, AI, positioning.

Scheme 3: A new header is added to carry a DC capability, such as DC-Capability:AR, AI, positioning.

Scheme 4: The SDP is enhanced to carry a DC capability, for example:

```
          m=application 52718 UDP/DTLS/SCTP webrtc-datachannel
          b=AS:500
          a-max-message-size:1024
          a=sctp-port:5000
          a=DC-Capability: AR, AI, positioning
          a=dcmap: 10 subprotocol="http"
```

It should be noted that if the SIP invite message received by UE-2 in the step 507 carries the DC capability of UE-1, UE-2 may select its own supported capability from the DC capability of UE-1, so as to carry a subset or a complete set of DC capabilities supported by both UE-1 and UE-2 in the SDP answer.

If the SIP invite message received by UE-2 in the step 507 carries no DC capability of UE-1, UE-2 adds all DC capabilities supported by UE-2 to the SDP answer.

Step 509: The S-CSCF-1 sends an SDP answer to the AS.

Step 510: The AS sends the SDP answer to the DC server-1, so as to establish a bootstrap DC channel between the DC Server-1 and UE-2; where the message (namely the SDP answer) sent by the AS to the DC server-1 includes the DC capability of UE-2.

It can be learned that in step 510, the DC capability of UE-2 is transmitted to the DC Server-1. In this way, the DC Server-1 may generate an APP list based on the DC capability of UE-1 and the DC capability of UE-2.

Step 511: The DC server-1 returns a response message to the AS.

Step 512: The AS sends an SDP answer to the S-CSCF-1.

Step 513: The S-CSCF-1 sends an SDP answer to UE-1, so as to establish a bootstrap DC channel between the DC Server-1 and UE-1.

Step 514: UE-1 and UE-2 obtain an APP list from the DC Server-1.

It can be learned from the steps 501 to 514 that during establishment of the bootstrap DC, the DC capability of UE-1 may be carried in the request message of establishing a bootstrap DC from UE-1 and is transmitted from UE-1 to the DC Server-1, and the DC capability of UE-2 may be carried in a response message of establishing a bootstrap DC and is transmitted from UE-2 to the DC Server-1.

It may be understood that the DC capability of UE-1 and the DC capability of UE-2 may not be carried in the request message and response message for establishing the bootstrap DC, and the DC Server-1 may alternatively make a request from UE-1 and UE-2 respectively. For example, the request may be made using a SIP message or a bootstrap channel request.

The scheme for making a request by using the SIP message are, for example, the following scheme 1 and scheme 2:

Scheme 1: The DC server-1 directly sends a SIP message to UE-1 or UE-2, for example, a re-invite or option message, where the message carries an indication for obtaining the DC capability.

Scheme 2: The DC server-1 sends a request or an indication for obtaining the DC capability of UE-1 or UE-2 to the AS (that is, the AS providing service for UE-1), and the AS sends a SIP message (for example, a re-invite or option message) to UE-1 or UE-2, where the message carries the indication for obtaining the DC capability.

The scheme for making a request by using the bootstrap channel request may be as follows:

The DC Server-1 sends a message (such as an HTTP message or a SIP message) to UE-1 or UE-2, requesting the DC capability of UE-1 or UE-2.

In addition, for details of the content included in the APP list and a delivery status of the APP list, refer to the foregoing description. Details are not repeated herein.

In addition, in step 503, if the AS determines based on content in the SDP in the SIP invite message (that is, the content in the line a) to use a DC Server (DC Server-2) providing services for UE-2, the DC capability of UE-1 and the DC capability of UE-2 need to be transmitted to the DC Server-2, so that the DC Server-2 may generate an APP list. In this case, during establishment of the bootstrap DC, the DC capability of UE-1 may be carried in the request message of establishing a bootstrap DC from UE-1 and is transmitted from UE-1 to the DC Server-2, and the DC capability of UE-2 may be carried in a response message of establishing a bootstrap DC and is transmitted from UE-2 to the DC Server-2. The process can be implemented in combination with the existing steps of establishing a bootstrap DC, which is not described herein.

For the method for processing a data channel application list provided in the embodiments of this application, the execution body may be an apparatus for processing a data channel application list. In this embodiment of this application, the apparatus for processing a data channel application list provided in the embodiments of this application is described by using the method for processing a data channel application list being executed by the apparatus for processing a data channel application list as an example.

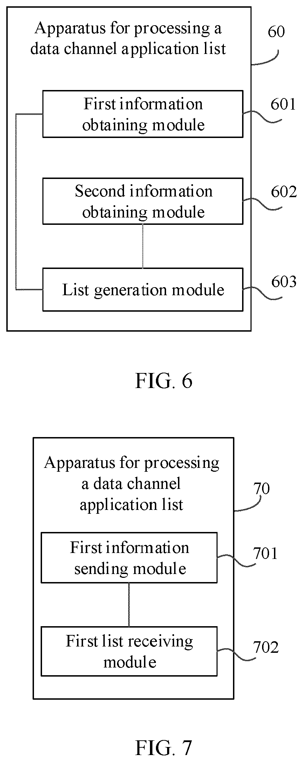

Referring to FIG. 6, FIG. 6 is a schematic structural diagram of an apparatus for processing a data channel application list according to an embodiment of this application. The apparatus 60 for processing a data channel application list may include the following modules:
a first information obtaining module 601, configured to obtain first data channel capability information of a first terminal device;
a second information obtaining module 602, configured to obtain second data channel capability information of a second terminal device; and
a list generation module 603, configured to generate a data channel application list based on the first data channel capability information and the second data channel capability information.

In the apparatus for processing a data channel application list in this embodiment of this application, the first data channel capability information of the first terminal device and the second data channel capability information of the second terminal device may be obtained, so as to generate the data channel application list based on the first data channel capability information and the second data channel capability information.

A data channel application supported by the first terminal device and a data channel application not supported by the first terminal device may be determined based on the first data channel capability information. A data channel application supported by the second terminal device and a data channel application not supported by the second terminal device may be determined based on the second data channel capability information. Therefore, the data channel application list generated based on the first data channel capability information and the second data channel capability information conforms to an actual status of supporting data channel applications by the first terminal device and the second terminal device. It can be learned that in this embodiment of this application, a data channel application list conforming to an actual status of supporting data channel applications by the two communication parties can be generated based on data channel capabilities of two communication parties.

Optionally, the apparatus further includes:
a list sending module, configured to send a data channel application list to at least one of the first terminal device and the second terminal device.

In an embodiment of this application, the first information obtaining module 601 includes:
a first receiving submodule, configured to receive the first data channel capability information sent by the first terminal device during establishment of a bootstrap data channel;
   or
a second receiving submodule, configured to receive the first data channel capability information sent by the first terminal device via a bootstrap data channel;
   or
a first sending submodule, configured to send a first request message to the first terminal device, where the first request message is used to instruct the first terminal device to send the first data channel capability information; and
a third receiving submodule, configured to receive the first data channel capability information sent by the first terminal device in response to the first request message;
   or
a fourth receiving submodule, configured to obtain the first data channel capability information sent by the first terminal device during registration.

In an embodiment of this application, the first receiving submodule is specifically configured to:
receive a second request message;
   or
receive the first data channel capability information sent by an application server in response to a second request message; where
the second request message is a request message for establishing the bootstrap data channel during establishment of the bootstrap data channel, and the second request message carries the first data channel capability information.

In an embodiment of this application, an allow header of the second request message carries the first data channel capability information;
or
a supported header of the second request message carries the first data channel capability information;
   or
the second request message includes a first header, and the first header carries the first data channel capability information;
   or
the second request message includes first data channel attribute information, and the first data channel attribute information carries the first data channel capability information.

In an embodiment of this application, the first sending submodule is specifically configured to:
send a third request message to an application server, where the third request message is used to instruct the application server to send the first request message to the first terminal device; and
the third receiving submodule is specifically configured to:
   receive the first data channel capability information sent by the first terminal device through the application server.

In an embodiment of this application, the first request message includes a re-invite request message or an option message.

In an embodiment of this application, the second information obtaining module 602 includes:
a fifth receiving submodule, configured to receive the second data channel capability information sent by the second terminal device during establishment of a bootstrap data channel;
   or
a sixth receiving submodule, configured to receive the second data channel capability information sent by the second terminal device via a bootstrap data channel;
   or
a second sending submodule, configured to send a fourth request message to the second terminal device, where the fourth request message is used to instruct the second terminal device to send the second data channel capability information; and
a seventh receiving submodule, configured to receive the second data channel capability information sent by the second terminal device in response to the fourth request message;
   or
an eighth receiving submodule, configured to obtain the second data channel capability information sent by the second terminal device during registration.

In an embodiment of this application, the fifth receiving submodule is specifically configured to:
receive a target response message;
   or
receive the second data channel capability information sent by an application server in response to a target response message; where
the target response message is a response message for establishing the bootstrap data channel during establishment of the bootstrap data channel, and the target response message carries the second data channel capability information.

In an embodiment of this application, an allow header of the target response message carries the second data channel capability information;
or
a supported header of the target response message carries the second data channel capability information;
   or
the target response message includes a second header, and the second header carries the second data channel capability information;
   or
the target response message includes second data channel attribute information, and the second data channel attribute information carries the second data channel capability information.

In an embodiment of this application, the second sending submodule is specifically configured to:
send a fifth request message to an application server, where the fifth request message is used to instruct the application server to send the fourth request message to the second terminal device; and
the seventh receiving submodule is specifically configured to:
   receive the second data channel capability information sent by the second terminal device through the application server.

In an embodiment of this application, the fourth request message includes a re-invite request message or an option message.

In an embodiment of this application, the apparatus further includes:
a third information sending module, configured to send the first data channel capability information to the second terminal device.

In an embodiment of this application, the second data channel capability information includes at least one data channel capability in an intersection of a data channel capability supported by the second terminal device and a data channel capability supported by the first terminal device and indicated by the first data channel capability information.

In an embodiment of this application, the third information sending module is specifically configured to:
send a sixth request message to an application server, where the sixth request message is used to instruct the application server to send the first data channel capability information to the second terminal device.

In an embodiment of this application, the data channel application list includes information of data channel applications supported by both the first terminal device and the second terminal device.

In an embodiment of this application, the data channel application list includes information of applications supported by the second terminal device and meeting a first preset condition, where the first preset condition includes that the core network device is capable of processing data of data channel applications into data recognizable by the first terminal device.

In an embodiment of this application, the data channel application list includes information of applications supported by the first terminal device and meeting a second preset condition, where the second preset condition includes that the core network device is capable of processing data of data channel applications into data recognizable by the second terminal device.

In an embodiment of this application, the list sending module includes:
a first list sending submodule, configured to: in a case that the first terminal device supports a data channel function and the second terminal device supports the data channel function, send the data channel application list to the first terminal device and the second terminal device; or
a second list sending submodule, configured to: in a case that the first terminal device does not support a data channel function and the second terminal device supports the data channel function, send the data channel application list to the second terminal device; or
a third list sending submodule, configured to: in a case that the first terminal device supports a data channel function and the second terminal device does not support the data channel function, send the data channel application list to the first terminal device.

In an embodiment of this application, the apparatus further includes:
a first indication sending module, configured to: send first indication information to the first terminal device, where the first indication information is used to indicate a data channel application supported by the first terminal device but not supported by the second terminal device, or the first indication information is used to indicate a data channel application supported by the first terminal device and supported by the second terminal device;
   or
a second indication sending module, configured to: send second indication information to the second terminal device, where the second indication information is used to indicate a data channel application supported by the second terminal device but not supported by the first terminal device, or the second indication information is used to indicate a data channel application supported by the first terminal device and supported by the second terminal device.

The apparatus for processing a data channel application list in this embodiment of the application may be an electronic device, such as an electronic device with an operating system, or a component in the electronic device, such as an integrated circuit or a chip. The electronic device may be a core network device or other devices than the core network device. For example, the core network device may include, but is not limited to, the types of the core network device listed above, and other devices may be a server, a network attached storage (Network Attached Storage, NAS), and the like. This is not specifically limited in the embodiments of this application.

The apparatus for processing a data channel application list provided in this embodiment of this application can implement the processes implemented in the method embodiment in FIG. 2, with the same technical effects achieved. To avoid repetition, details are not described herein again.

Referring to FIG. 7, FIG. 7 is a schematic structural diagram of an apparatus for processing a data channel application list according to an embodiment of this application. The apparatus 70 for processing a data channel application list may include the following modules:
a first information sending module 701, configured to send first data channel capability information of first terminal device to a core network device; and
a first list receiving module 702, configured to receive a data channel application list sent by the core network device; where
the data channel application list is generated by the core network device based on the first data channel capability information and second data channel capability information, and the second data channel capability information is data channel capability information of a second terminal device.

The apparatus for processing a data channel application list in this embodiment of this application may send the first data channel capability information of the first terminal device to the core network device, so that the core network device may generate the data channel application list based on the first data channel capability information and the second data channel capability information after obtaining the second data channel capability information of the second terminal device. It can be learned from the foregoing that in this embodiment of this application, a data channel application list conforming to an actual status of supporting data channel applications by the two communication parties may be generated based on data channel capabilities of two communication parties, so as to provide accurate data support for the two communication parties to download data channel applications, thereby reducing a probability of downloading, by the two communication parties based on the data channel application list, a data channel application not supported by the other party, and further reducing a probability of data channel establishment failure and saving resources and time.

In an embodiment of this application, the first information sending module 701 includes:
a third sending submodule, configured to send the first data channel capability information to the core network device during establishment of a bootstrap data channel;
   or
a fourth sending submodule, configured to send the first data channel capability information to the core network device via a bootstrap data channel;
   or
a ninth receiving submodule, configured to receive a first request message sent by the core network device, where the first request message is used to instruct the first terminal device to send the first data channel capability information; and
a fifth sending submodule, configured to send the first data channel capability information to the core network device in response to the first request message;
   or
a sixth sending submodule, configured to send the first data channel capability information to the core network device during registration.

In an embodiment of this application, the third sending submodule is specifically configured to:
send a second request message to the core network device;
   or
send a second request message to the application server; where
the second request message is a request message for establishing the bootstrap data channel during establishment of the bootstrap data channel, and the second request message carries the first data channel capability information.

In an embodiment of this application, an allow header of the second request message carries the first data channel capability information;
or
a supported header of the second request message carries the first data channel capability information;
   or
the second request message includes a first header determined in advance, and the first header carries the first data channel capability information;
   or
the second request message includes first data channel attribute information, and the first data channel attribute information carries the first data channel capability information.

In an embodiment of this application, the ninth receiving submodule is specifically configured to:
receive the first request message sent by the application server in response to a third request message, where the third request message is used to instruct the application server to send the first request message to the first terminal device.

The fifth sending submodule is specifically configured to:
send the first data channel capability information to the core network device through the application server in response to the first request message.

In an embodiment of this application, the first request message includes a re-invite request message or an option message.

In an embodiment of this application, the apparatus further includes:
a first indication receiving module, configured to: receive first indication information sent by the core network device, where the first indication information is used to indicate a data channel application supported by the first terminal device but not supported by the second terminal device, or the first indication information is used to indicate a data channel application supported by the first terminal device and supported by the second terminal device.

The apparatus for processing a data channel application list in this embodiment of the application may be an electronic device, such as an electronic device with an operating system, or a component in the electronic device, such as an integrated circuit or a chip. The electronic device may be a terminal device or other devices than the terminal device. For example, the terminal device may include, but is not limited to, the types of the terminal device 11 listed above, and other devices may be a server, a network attached storage (Network Attached Storage, NAS), and the like. This is not specifically limited in the embodiments of this application.

The apparatus for processing a data channel application list provided in this embodiment of this application can implement the processes implemented in the method embodiment in FIG. 3, with the same technical effects achieved. To avoid repetition, details are not described herein again.

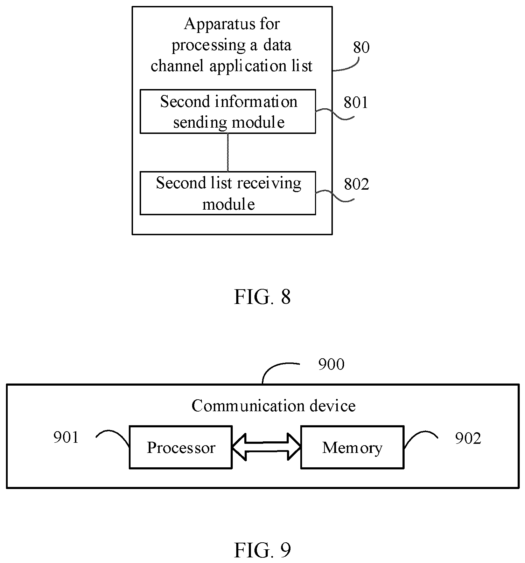

Referring to FIG. 8, FIG. 8 is a schematic structural diagram of an apparatus for processing a data channel application list according to an embodiment of this application. The apparatus 80 for processing a data channel application list may include the following modules:
a second information sending module 801, configured to send second data channel capability information to a core network device; and
a second list receiving module 802, configured to receive a data channel application list sent by the core network device; where

The data channel application list is generated by the core network device based on first data channel capability information and the second data channel capability information, and the first data channel capability information is data channel capability information of the first terminal device.

The apparatus for processing a data channel application list in this embodiment of this application may send the second data channel capability information of the second terminal device to the core network device, so that the core network device may generate the data channel application list based on the first data channel capability information and the second data channel capability information after obtaining the first data channel capability information of the first terminal device. It can be learned from the foregoing that in this embodiment of this application, a data channel application list conforming to an actual status of supporting data channel applications by the two communication parties may be generated based on data channel capabilities of two communication parties, so as to provide accurate data support for the two communication parties to download data channel applications, thereby reducing a probability of downloading, by the two communication parties based on the data channel application list, a data channel application not supported by the other party, and further reducing a probability of data channel establishment failure and saving resources and time.

In an embodiment of this application, the second information sending module 801 includes:
a seventh sending submodule, configured to send the second data channel capability information to the core network device during establishment of a bootstrap data channel;
   or
an eighth sending submodule, configured to send the second data channel capability information to the core network device via a bootstrap data channel;
   or
a tenth receiving submodule, configured to receive a fourth request message sent by the core network device, where the fourth request message is used to instruct the second terminal device to send the second data channel capability information; and
a ninth sending submodule, configured to send the second data channel capability information to the core network device in response to the fourth request message;
   or
a tenth sending submodule, configured to send the second data channel capability information to the core network device during registration.

In an embodiment of this application, the seventh sending submodule is specifically configured to:
send a target response message to the core network device;
   or
send a target response message to the application server; where
the target response message is a response message for establishing the bootstrap data channel during establishment of the bootstrap data channel, and the target response message carries the second data channel capability information.

In an embodiment of this application, an allow header of the target response message carries the second data channel capability information;
or
a supported header of the target response message carries the second data channel capability information;
   or
the target response message includes a second header determined in advance, and the second header carries the second data channel capability information;
   or
the target response message includes second data channel attribute information, and the second data channel attribute information carries the second data channel capability information.

In an embodiment of this application, the tenth receiving submodule is specifically configured to:
receive the fourth request message sent by the application server in response to a fifth request message, where the fifth request message is used to instruct the application server to send the fourth request message to the second terminal device.
the ninth sending submodule is specifically configured to:
   send the second data channel capability information to the core network device through the application server in response to the fourth request message.

In an embodiment of this application, the fourth request message includes a re-invite request message or an option message.

In an embodiment of this application, the apparatus further includes:
a third information obtaining module, configured to receive the first data channel capability information sent by the core network device.

In an embodiment of this application, the second data channel capability information includes at least one data channel capability in an intersection of a data channel capability supported by the second terminal device and a data channel capability supported by the first terminal device and indicated by the first data channel capability information.

In an embodiment of this application, the third information obtaining module is specifically configured to:
receive the first data channel capability information sent by an application server in response to a sixth request message, where the sixth request message is used to instruct the application server to send the first data channel capability information to the second terminal device.

In an embodiment of this application, the apparatus further includes:
a second indication receiving module, configured to: receive second indication information sent by the core network device, where the second indication information is used to indicate a data channel application supported by the second terminal device but not supported by the first terminal device, or the second indication information is used to indicate a data channel application supported by the first terminal device and supported by the second terminal device.

The apparatus for processing a data channel application list in this embodiment of the application may be an electronic device, such as an electronic device with an operating system, or a component in the electronic device, such as an integrated circuit or a chip. The electronic device may be a terminal device or other devices than the terminal device. For example, the terminal device may include, but is not limited to, the types of the terminal device 11 listed above, and other devices may be a server, a network attached storage (Network Attached Storage, NAS), and the like. This is not specifically limited in the embodiments of this application.

The apparatus for processing a data channel application list provided in this embodiment of this application can implement the processes implemented in the method embodiment in FIG. 4, with the same technical effects achieved. To avoid repetition, details are not described herein again.

Optionally, as shown in FIG. 9, an embodiment of this application further provides a communication device 900, including a processor 901 and a memory 902, and a program or instruction capable of running on the processor 901 is stored in the memory 902. For example, when the communication device 900 is a core network device and when the program or instruction is executed by the processor 901, the steps of the foregoing embodiments of the method according to the first aspect are implemented, with the same technical effects achieved. When the communication device 900 is a terminal device and when the program or instruction is executed by the processor 901, the steps of the foregoing method embodiments according to the second aspect or the third aspect are implemented, with the same technical effects achieved. To avoid repetition, details are not described herein.

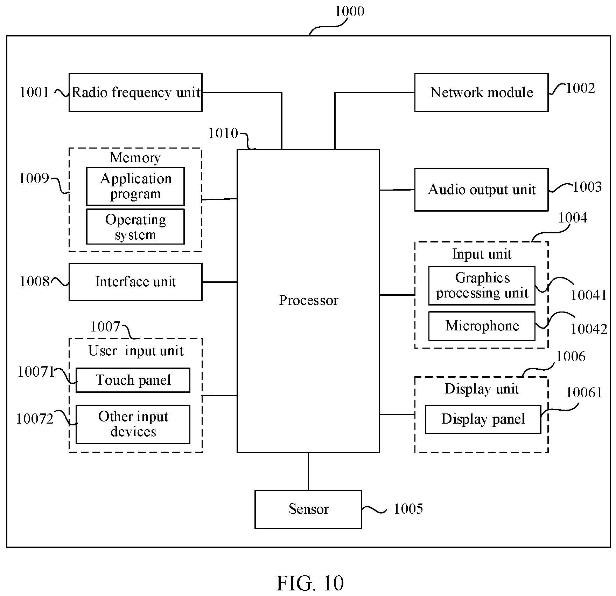

As shown in FIG. 10, FIG. 10 is a schematic diagram of a hardware structure of a terminal device for implementing the embodiments of this application.

The terminal device 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal device 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal device shown in FIG. 10 does not constitute any limitation on the terminal device. The terminal device may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a core network device, and then sends the downlink data to the processor 1010 for processing. In addition, the radio frequency unit 1001 may send uplink data to the core network device. Generally, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may include a first storage area for storing a program or instruction and a second storage area for storing data. The first storage area may store an operating system, an application program or instruction required by at least one function (for example, a sound playback function or an image playback function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory

(Enhanced SDRAM, ESDRAM), a synchlink dynamic random access memory (Synch link DRAM, SLDRAM), and a direct rambus random access memory (Direct Rambus RAM, DRRAM). The memory 1009 in the embodiments of this application includes but is not limited to these and any other suitable types of memories.

The processor 1010 may include one or more processing units. Optionally, an application processor and a modem processor may be integrated in the processor 1010. The application processor primarily processes operations involving an operating system, user interfaces, application programs, and the like. The modem processor primarily processes radio communication signals, for example, being a baseband processor. It can be understood that the modem processor may alternatively be not integrated in the processor 1010.
when the terminal device 1000 is a first terminal device, the radio frequency unit 1001 is configured to: send first data channel capability information of the first terminal device to a core network device; and receive a data channel application list sent by the core network device; where
the data channel application list is generated by the core network device based on the first data channel capability information and second data channel capability information, and the second data channel capability information is data channel capability information of a second terminal device.

Optionally, that the radio frequency unit 1001 sends the first data channel capability information of the first terminal device to the core network device is specifically:
sending the first data channel capability information to the core network device during establishment of a bootstrap data channel;
   or
sending the first data channel capability information to the core network device via a bootstrap data channel;
   or
receiving a first request message sent by the core network device, where the first request message is used to instruct the first terminal device to send the first data channel capability information; and
sending the first data channel capability information to the core network device in response to the first request message;
   or
sending the first data channel capability information to the core network device during registration.

Optionally, that the radio frequency unit 1001 sends the first data channel capability information to the core network device during establishment of the bootstrap data channel is specifically:
sending a second request message to the core network device;
   or
sending a second request message to the application server; where
the second request message is a request message for establishing the bootstrap data channel during establishment of the bootstrap data channel, and the second request message carries the first data channel capability information.

Optionally, an allow header of the second request message carries the first data channel capability information;
or
a supported header of the second request message carries the first data channel capability information;
   or
the second request message includes a first header determined in advance, and the first header carries the first data channel capability information;
   or
the second request message includes first data channel attribute information, and the first data channel attribute information carries the first data channel capability information.

Optionally, that the radio frequency unit 1001 receives the first request message sent by the core network device is specifically:
receiving the first request message sent by the application server in response to a third request message, where the third request message is used to instruct the application server to send the first request message to the first terminal device.

That the radio frequency unit 1001 sends the first data channel capability information to the core network device in response to the first request message is specifically:
sending the first data channel capability information to the core network device through the application server in response to the first request message.

Optionally, the first request message includes a re-invite request message or an option message.

Optionally, the radio frequency unit 1001 is further configured to:
receive first indication information sent by the core network device, where the first indication information is used to indicate a data channel application supported by the first terminal device but not supported by the second terminal device, or the first indication information is used to indicate a data channel application supported by the first terminal device and supported by the second terminal device.

When the terminal device 1000 is a second terminal device, the radio frequency unit 1001 is configured to: send second data channel capability information to a core network device; and receive a data channel application list sent by the core network device; where
the data channel application list is generated by the core network device based on first data channel capability information and the second data channel capability information, and the first data channel capability information is data channel capability information of the first terminal device.

Optionally, that the radio frequency unit 1001 sends the second data channel capability information of the second terminal device to the core network device is specifically:
sending the second data channel capability information to the core network device during establishment of a bootstrap data channel;
   or
sending the second data channel capability information to the core network device via a bootstrap data channel;
   or
receiving a fourth request message sent by the core network device, where the fourth request message is used to instruct the second terminal device to send the second data channel capability information; and
sending the second data channel capability information to the core network device in response to the fourth request message;
   or
sending the second data channel capability information to the core network device during registration.

Optionally, that the radio frequency unit 1001 sends the second data channel capability information to the core network device during establishment of the bootstrap data channel is specifically:
sending a target response message to the core network device;
   or
sending a target response message to the application server; where
the target response message is a response message for establishing the bootstrap data channel during establishment of the bootstrap data channel, and the target response message carries the second data channel capability information.

Optionally,
an allow header of the target response message carries the second data channel capability information;
   or
a supported header of the target response message carries the second data channel capability information;
   or
the target response message includes a second header determined in advance, and the second header carries the second data channel capability information;
   or
the target response message includes second data channel attribute information, and the second data channel attribute information carries the second data channel capability information.

Optionally, that the radio frequency unit 1001 receives the third request message sent by the core network device is specifically:
receiving the fourth request message sent by the application server in response to a fifth request message, where the fifth request message is used to instruct the application server to send the fourth request message to the second terminal device.

That the radio frequency unit 1001 sends the second data channel capability information to the core network device in response to the fourth request message is specifically:
sending the second data channel capability information to the core network device through the application server in response to the fourth request message.

Optionally, the fourth request message includes a re-invite request message or an option message.

Optionally, the radio frequency unit 1001 is further configured to receive the first data channel capability information sent by the core network device.

Optionally, the second data channel capability information includes at least one data channel capability in an intersection of a data channel capability supported by the second terminal device and a data channel capability supported by the first terminal device and indicated by the first data channel capability information.

Optionally, that the radio frequency unit 1001 receives the first data channel capability information sent by the core network device is specifically:
receiving the first data channel capability information sent by an application server in response to a sixth request message, where the sixth request message is used to instruct the application server to send the first data channel capability information to the second terminal device.

Optionally, the radio frequency unit 1001 is further configured to:
receive second indication information sent by the core network device, where the second indication information is used to indicate a data channel application supported by the second terminal device but not supported by the first terminal device, or the second indication information is used to indicate a data channel application supported by the first terminal device and supported by the second terminal device.

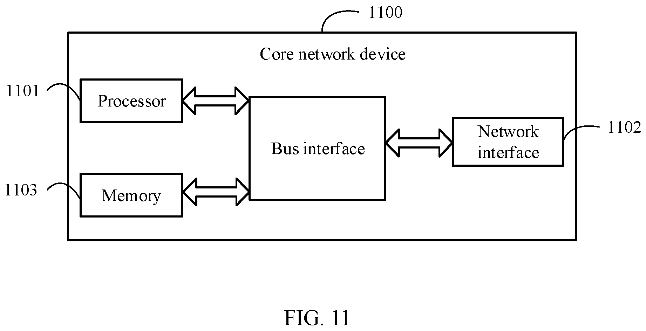

As shown in FIG. 11, an embodiment of this application further provides a core network device. The core network device 1100 includes a processor 1101, a network interface 1102, and a memory 1103. The network interface 1102 is, for example, a common public radio interface (common public radio interface, CPRI).

Specifically, the core network device 1100 in this embodiment of this application further includes: an instruction or program stored in the memory 1103 and capable of running on the processor 1101. The processor 1101 invokes the instruction or program in the memory 1103 to execute the method executed by the modules shown in FIG. 6, with the same technical effects achieved. To avoid repetition, details are not repeated herein.

An embodiment of this application further provides a readable storage medium, where a program or instruction is stored in the readable storage medium. When the program or instruction is executed by a processor, the processes of the foregoing embodiment of the method for processing a data channel application list can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instruction to implement the processes of the foregoing embodiment of the method for processing a data channel application list, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the method for processing a data channel application list, with the same technical effects achieved. To avoid repetition, details are not repeated herein.

An embodiment of this application further provides a transmission system of a data channel application list, including a first terminal device, a second terminal device, and a core network device. The core network device may be configured to execute the steps of the method for processing a data channel application list according to the first aspect; the first terminal device may be configured to execute the steps of the method for processing a data channel application list according to the second aspect; and the second terminal device may be configured to execute the steps of the method for processing a data channel application list according to the third aspect.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A method for processing a data channel application list, comprising:
obtaining (201), by a core network device, first data channel capability information of a first terminal device;
obtaining (202), by the core network device, second data channel capability information of a second terminal device; further **characterized by** comprising:
generating (203), by the core network device, a data channel application list based on the first data channel capability information and the second data channel capability information.

2. The method according to claim 1, wherein the method further comprises:
sending, by the core network device, the data channel application list to at least one of the first terminal device and the second terminal device.

3. The method according to claim 1, wherein the obtaining (201), by a core network device, first data channel capability information of a first terminal device comprises:
receiving, by the core network device, the first data channel capability information sent by the first terminal device during establishment of a bootstrap data channel;
or
receiving, by the core network device, the first data channel capability information sent by the first terminal device via a bootstrap data channel;
or
sending, by the core network device, a first request message to the first terminal device, wherein the first request message is used to instruct the first terminal device to send the first data channel capability information; and
receiving, by the core network device, the first data channel capability information sent by the first terminal device in response to the first request message;
or
obtaining, by the core network device, the first data channel capability information sent by the first terminal device during registration.

4. The method according to claim 3, wherein the receiving, by the core network device, the first data channel capability information sent by the first terminal device during establishment of a bootstrap data channel comprises:
receiving, by the core network device, a second request message;
or
receiving, by the core network device, the first data channel capability information sent by an application server in response to a second request message; wherein
the second request message is a request message for establishing the bootstrap data channel during establishment of the bootstrap data channel, and the second request message carries the first data channel capability information; wherein
an allow header of the second request message carries the first data channel capability information;
or
a supported header of the second request message carries the first data channel capability information;
or
the second request message comprises a first header, and the first header carries the first data channel capability information;
or
the second request message comprises first data channel attribute information, and the first data channel attribute information carries the first data channel capability information.

5. The method according to claim 3, wherein the sending, by the core network device, a first request message to the first terminal device comprises:
sending, by the core network device, a third request message to an application server, wherein the third request message is used to instruct the application server to send the first request message to the first terminal device; and
the receiving, by the core network device, the first data channel capability information sent by the first terminal device in response to the first request message comprises:
receiving, by the core network device, the first data channel capability information sent by the first terminal device through the application server.

6. The method according to claim 1, wherein the obtaining (202), by the core network device, second data channel capability information of a second terminal device comprises:
receiving, by the core network device, the second data channel capability information sent by the second terminal device during establishment of a bootstrap data channel;
or
receiving, by the core network device, the second data channel capability information sent by the second terminal device via a bootstrap data channel;
or
sending, by the core network device, a fourth request message to the second terminal device, wherein the fourth request message is used to instruct the second terminal device to send the second data channel capability information; and
receiving, by the core network device, the second data channel capability information sent by the second terminal device in response to the fourth request message;
or
obtaining, by the core network device, the second data channel capability information sent by the second terminal device during registration.

7. The method according to claim 1, wherein the method further comprises:
sending, by the core network device, the first data channel capability information to the second terminal device; wherein
the second data channel capability information comprises at least one data channel capability in an intersection of a data channel capability supported by the second terminal device and a data channel capability supported by the first terminal device and indicated by the first data channel capability information.

8. The method according to claim 7, wherein the sending, by the core network device, the first data channel capability information to the second terminal device comprises:
sending, by the core network device, a sixth request message to an application server, wherein the sixth request message is used to instruct the application server to send the first data channel capability information to the second terminal device.

9. The method according to claim 1, wherein the data channel application list comprises information of data channel applications supported by both the first terminal device and the second terminal device; or
the data channel application list comprises information of applications supported by the second terminal device and meeting a first preset condition, wherein the first preset condition comprises that the core network device is capable of processing data of data channel applications into data recognizable by the first terminal device; or
the data channel application list comprises information of applications supported by the first terminal device and meeting a second preset condition, wherein the second preset condition comprises that the core network device is capable of processing data of data channel applications into data recognizable by the second terminal device.

10. A method for processing a data channel application list, comprising:
sending (301), by a first terminal device, first data channel capability information of the first terminal device to a core network device; and
receiving (302), by the first terminal device, a data channel application list sent by the core network device; wherein it is further **characterized in that**:
the data channel application list is generated by the core network device based on the first data channel capability information and second data channel capability information, and the second data channel capability information is data channel capability information of a second terminal device.

11. The method according to claim 10, wherein the sending (301), by a first terminal device, first data channel capability information of the first terminal device to a core network device comprises:
sending, by the first terminal device, the first data channel capability information to the core network device during establishment of a bootstrap data channel;
or
sending, by the first terminal device, the first data channel capability information to the core network device via a bootstrap data channel;
or
receiving, by the first terminal device, a first request message sent by the core network device, wherein the first request message is used to instruct the first terminal device to send the first data channel capability information; and
sending, by the first terminal device, the first data channel capability information to the core network device in response to the first request message;
or
sending, by the first terminal device, the first data channel capability information to the core network device during registration.

12. A core network device (1100), comprising a processor (1101) and a memory (1103), wherein the memory (1103) stores a program or instruction capable of running on the processor (1101), wherein when the program or instruction is executed by the processor (1101), the steps of the method for processing a data channel application list according to any one of claims 1 to 9 are implemented.

13. A terminal device (1000), comprising a processor (1010) and a memory (1009), wherein a program or instruction capable of running on the processor (1010) is stored in the memory (1009), and when the program or instruction is executed by the processor (1010), the steps of the method for processing a data channel application list according to claim 10 or 11 are implemented.

14. A chip, comprising a processor and a communication interface, wherein the communication interface is coupled to the processor, and the processor is configured to execute a program or instruction to implement the steps of the method for processing a data channel application list according to any one of claims 1 to 9, or the steps of the method for processing a data channel application list according to any one of claims 10 to 11.

15. A computer program product, wherein the program product is stored in a non-volatile storage medium, and the program product is executed by at least one processor to implement the steps of the method for processing a data channel application list according to any one of claims 1 to 9, or the steps of the method for processing a data channel application list according to any one of claims 10 to 11.

## Patentansprüche

1. Ein Verfahren zur Verarbeitung einer Datenkanalanwendungsliste, das Folgendes beinhaltet:
Erhalten (201), durch eine Kernnetzwerkvorrichtung, erster Datenkanalfähigkeitsinformationen einer ersten Endgerätvorrichtung;
Erhalten (202), durch die Kernnetzwerkvorrichtung, zweiter Datenkanalfähigkeitsinformationen einer zweiten Endgerätvorrichtung; ferner **dadurch gekennzeichnet, dass** es Folgendes beinhaltet:
Erzeugen (203), durch die Kernnetzwerkvorrichtung, einer Datenkanalanwendungsliste basierend auf den ersten Datenkanalfähigkeitsinformationen und den zweiten Datenkanalfähigkeitsinformationen.

2. Verfahren gemäß Anspruch 1, wobei das Verfahren ferner Folgendes beinhaltet:
Senden, durch die Kernnetzwerkvorrichtung, der Datenkanalanwendungsliste an mindestens eine von der ersten Endgerätvorrichtung und der zweiten Endgerätvorrichtung.

3. Verfahren gemäß Anspruch 1, wobei das Erhalten (201), durch eine Kernnetzwerkvorrichtung, erster Datenkanalfähigkeitsinformationen einer ersten Endgerätvorrichtung Folgendes beinhaltet:
Empfangen, durch die Kernnetzwerkvorrichtung, der ersten Datenkanalfähigkeitsinformationen, die durch die erste Endgerätvorrichtung während einer Herstellung eines Bootstrap-Datenkanals gesendet werden;
oder
Empfangen, durch die Kernnetzwerkvorrichtung, der ersten Datenkanalfähigkeitsinformationen, die durch die erste Endgerätvorrichtung über einen Bootstrap-Datenkanal gesendet werden;
oder
Senden, durch die Kernnetzwerkvorrichtung, einer ersten Anforderungsnachricht an die erste Endgerätvorrichtung, wobei die erste Anforderungsnachricht verwendet wird, um die erste Endgerätvorrichtung anzuweisen, die ersten Datenkanalfähigkeitsinformationen zu senden; und
Empfangen, durch die Kernnetzwerkvorrichtung, der ersten Datenkanalfähigkeitsinformationen, die durch die erste Endgerätvorrichtung als Reaktion auf die erste Anforderungsnachricht gesendet werden;
oder
Erhalten, durch die Kernnetzwerkvorrichtung, der ersten Datenkanalfähigkeitsinformationen, die durch die erste Endgerätvorrichtung während einer Registrierung gesendet werden.

4. Verfahren gemäß Anspruch 3, wobei das Empfangen, durch die Kernnetzwerkvorrichtung, der ersten Datenkanalfähigkeitsinformationen, die durch die erste Endgerätvorrichtung während einer Herstellung eines Bootstrap-Datenkanals gesendet werden, Folgendes beinhaltet:
Empfangen, durch die Kernnetzwerkvorrichtung, einer zweiten Anforderungsnachricht; oder
Empfangen, durch die Kernnetzwerkvorrichtung, der ersten Datenkanalfähigkeitsinformationen, die durch einen Anwendungsserver als Reaktion auf eine zweite Anforderungsnachricht gesendet werden; wobei
die zweite Anforderungsnachricht eine Anforderungsnachricht zur Herstellung des Bootstrap-Datenkanals während einer Herstellung des Bootstrap-Datenkanals ist und die zweite Anforderungsnachricht die ersten Datenkanalfähigkeitsinformationen trägt; wobei
ein Allow-Header der zweiten Anforderungsnachricht die ersten Datenkanalfähigkeitsinformationen trägt;
oder
ein Supported-Header der zweiten Anforderungsnachricht die ersten Datenkanalfähigkeitsinformationen trägt;
oder
die zweite Anforderungsnachricht einen ersten Header beinhaltet und der erste Header die ersten Datenkanalfähigkeitsinformationen trägt;
oder
die zweite Anforderungsnachricht erste Datenkanalattributinformationen beinhaltet und die ersten Datenkanalattributinformationen die ersten Datenkanalfähigkeitsinformationen tragen.

5. Verfahren gemäß Anspruch 3, wobei das Senden, durch die Kernnetzwerkvorrichtung, einer ersten Anforderungsnachricht an die erste Endgerätvorrichtung Folgendes beinhaltet:
Senden, durch die Kernnetzwerkvorrichtung, einer dritten Anforderungsnachricht an einen Anwendungsserver, wobei die dritte Anforderungsnachricht verwendet wird, um den Anwendungsserver anzuweisen, die erste Anforderungsnachricht an die erste Endgerätvorrichtung zu senden; und
das Empfangen, durch die Kernnetzwerkvorrichtung, der ersten Datenkanalfähigkeitsinformationen, die durch die erste Endgerätvorrichtung als Reaktion auf die erste Anforderungsnachricht gesendet werden, Folgendes beinhaltet:
Empfangen, durch die Kernnetzwerkvorrichtung, der ersten Datenkanalfähigkeitsinformationen, die durch die erste Endgerätvorrichtung via den Anwendungsserver gesendet werden.

6. Verfahren gemäß Anspruch 1, wobei das Erhalten (202), durch die Kernnetzwerkvorrichtung, zweiter Datenkanalfähigkeitsinformationen einer zweiten Endgerätvorrichtung Folgendes beinhaltet:
Empfangen, durch die Kernnetzwerkvorrichtung, der zweiten Datenkanalfähigkeitsinformationen, die durch die zweite Endgerätvorrichtung während einer Herstellung eines Bootstrap-Datenkanals gesendet werden;
oder
Empfangen, durch die Kernnetzwerkvorrichtung, der zweiten Datenkanalfähigkeitsinformationen, die durch die zweite Endgerätvorrichtung über einen Bootstrap-Datenkanal gesendet werden;
oder
Senden, durch die Kernnetzwerkvorrichtung, einer vierten Anforderungsnachricht an die zweite Endgerätvorrichtung, wobei die vierte Anforderungsnachricht verwendet wird, um die zweite Endgerätvorrichtung anzuweisen, die zweiten Datenkanalfähigkeitsinformationen zu senden; und
Empfangen, durch die Kernnetzwerkvorrichtung, der zweiten Datenkanalfähigkeitsinformationen, die durch die zweite Endgerätvorrichtung als Reaktion auf die vierte Anforderungsnachricht gesendet werden;
oder
Erhalten, durch die Kernnetzwerkvorrichtung, der zweiten Datenkanalfähigkeitsinformationen, die durch die zweite Endgerätvorrichtung während einer Registrierung gesendet werden.

7. Verfahren gemäß Anspruch 1, wobei das Verfahren ferner Folgendes beinhaltet:
Senden, durch die Kernnetzwerkvorrichtung, der ersten Datenkanalfähigkeitsinformationen an die zweite Endgerätvorrichtung; wobei
die zweiten Datenkanalfähigkeitsinformationen mindestens eine Datenkanalfähigkeit in einer Schnittmenge einer Datenkanalfähigkeit, die durch die zweite Endgerätvorrichtung unterstützt wird, und einer Datenkanalfähigkeit, die durch die erste Endgerätvorrichtung unterstützt wird und durch die ersten Datenkanalfähigkeitsinformationen angegeben wird, beinhalten.

8. Verfahren gemäß Anspruch 7, wobei das Senden, durch die Kernnetzwerkvorrichtung, der ersten Datenkanalfähigkeitsinformationen an die zweite Endgerätvorrichtung Folgendes beinhaltet:
Senden, durch die Kernnetzwerkvorrichtung, einer sechsten Anforderungsnachricht an einen Anwendungsserver, wobei die sechste Anforderungsnachricht verwendet wird, um den Anwendungsserver anzuweisen, die ersten Datenkanalfähigkeitsinformationen an die zweite Endgerätvorrichtung zu senden.

9. Verfahren gemäß Anspruch 1, wobei die Datenkanalanwendungsliste Informationen über Datenkanalanwendungen beinhaltet, die sowohl durch die erste Endgerätvorrichtung als auch die zweite Endgerätvorrichtung unterstützt werden; oder
die Datenkanalanwendungsliste Informationen über Anwendungen beinhaltet, die durch die zweite Endgerätvorrichtung unterstützt werden und eine erste voreingestellte Bedingung erfüllen, wobei die erste voreingestellte Bedingung beinhaltet, dass die Kernnetzwerkvorrichtung dazu fähig ist, Daten von Datenkanalanwendungen zu Daten zu verarbeiten, die durch die erste Endgerätvorrichtung erkennbar sind; oder
die Datenkanalanwendungsliste Informationen über Anwendungen beinhaltet, die durch die erste Endgerätvorrichtung unterstützt werden und eine zweite voreingestellte Bedingung erfüllen, wobei die zweite voreingestellte Bedingung beinhaltet, dass die Kernnetzwerkvorrichtung dazu fähig ist, Daten von Datenkanalanwendungen zu Daten zu verarbeiten, die durch die zweite Endgerätvorrichtung erkennbar sind.

10. Ein Verfahren zur Verarbeitung einer Datenkanalanwendungsliste, das Folgendes beinhaltet:
Senden (301), durch eine erste Endgerätvorrichtung, erster Datenkanalfähigkeitsinformationen der ersten Endgerätvorrichtung an eine Kernnetzwerkvorrichtung; und
Empfangen (302), durch die erste Endgerätvorrichtung, einer Datenkanalanwendungsliste, die durch die Kernnetzwerkvorrichtung gesendet wird;
wobei es ferner **dadurch gekennzeichnet ist, dass**:
die Datenkanalanwendungsliste durch die Kernnetzwerkvorrichtung basierend auf den ersten Datenkanalfähigkeitsinformationen und zweiten Datenkanalfähigkeitsinformationen erzeugt wird und die zweiten Datenkanalfähigkeitsinformationen Datenkanalfähigkeitsinformationen einer zweiten Endgerätvorrichtung sind.

11. Verfahren gemäß Anspruch 10, wobei das Senden (301), durch eine erste Endgerätvorrichtung, erster Datenkanalfähigkeitsinformationen der ersten Endgerätvorrichtung an eine Kernnetzwerkvorrichtung Folgendes beinhaltet:
Senden, durch die erste Endgerätvorrichtung, der ersten Datenkanalfähigkeitsinformationen an die Kernnetzwerkvorrichtung während einer Herstellung eines Bootstrap-Datenkanals;
oder
Senden, durch die erste Endgerätvorrichtung, der ersten Datenkanalfähigkeitsinformationen an die Kernnetzwerkvorrichtung über einen Bootstrap-Datenkanal;
oder
Empfangen, durch die erste Endgerätvorrichtung, einer ersten Anforderungsnachricht, die durch die Kernnetzwerkvorrichtung gesendet wird, wobei die erste Anforderungsnachricht verwendet wird, um die erste Endgerätvorrichtung anzuweisen,
die ersten Datenkanalfähigkeitsinformationen zu senden; und
Senden, durch die erste Endgerätvorrichtung, der ersten Datenkanalfähigkeitsinformationen an die Kernnetzwerkvorrichtung als Reaktion auf die erste Anforderungsnachricht;
oder
Senden, durch die erste Endgerätvorrichtung, der ersten Datenkanalfähigkeitsinformationen an die Kernnetzwerkvorrichtung während einer Registrierung.

12. Eine Kernnetzwerkvorrichtung (1100), die einen Prozessor (1101) und einen Speicher (1103) beinhaltet, wobei der Speicher (1103) ein Programm oder eine Anweisung speichert, das/die dazu fähig ist, auf dem Prozessor (1101) zu laufen, wobei, wenn das Programm oder die Anweisung durch den Prozessor (1101) ausgeführt wird, die Schritte des Verfahrens zur Verarbeitung einer Datenkanalanwendungsliste gemäß einem der Ansprüche 1 bis 9 implementiert werden.

13. Eine Endgerätvorrichtung (1000), die einen Prozessor (1010) und einen Speicher (1009) beinhaltet, wobei in dem Speicher (1009) ein Programm oder eine Anweisung gespeichert ist, das/die dazu fähig ist, auf dem Prozessor (1010) zu laufen, und, wenn das Programm oder die Anweisung durch den Prozessor (1010) ausgeführt wird, die Schritte des Verfahrens zur Verarbeitung einer Datenkanalanwendungsliste gemäß Anspruch 10 oder 11 implementiert werden.

14. Ein Chip, der einen Prozessor und eine Kommunikationsschnittstelle beinhaltet, wobei die Kommunikationsschnittstelle mit dem Prozessor gekoppelt ist und der Prozessor konfiguriert ist, um ein Programm oder eine Anweisung auszuführen, um die Schritte des Verfahrens zur Verarbeitung einer Datenkanalanwendungsliste gemäß einem der Ansprüche 1 bis 9 oder die Schritte des Verfahrens zur Verarbeitung einer Datenkanalanwendungsliste gemäß einem der Ansprüche 10 bis 11 zu implementieren.

15. Ein Computerprogrammprodukt, wobei das Programmprodukt in einem nichtflüchtigen Speichermedium gespeichert ist und das Programmprodukt durch mindestens einen Prozessor ausgeführt wird, um die Schritte des Verfahrens zur Verarbeitung einer Datenkanalanwendungsliste gemäß einem der Ansprüche 1 bis 9 oder die Schritte des Verfahrens zur Verarbeitung einer Datenkanalanwendungsliste gemäß einem der Ansprüche 10 bis 11 zu implementieren.

## Revendications

1. Un procédé pour traiter une liste d'applications de canal de données, comprenant :
le fait d'obtenir (201), par un dispositif de réseau central, des premières informations de capacité de canal de données d'un premier dispositif de terminal ;
le fait d'obtenir (202), par le dispositif de réseau central, des deuxièmes informations de capacité de canal de données d'un deuxième dispositif de terminal ; **caractérisé en outre par le fait qu'**il comprend :
le fait de générer (203), par le dispositif de réseau central, une liste d'applications de canal de données sur la base des premières informations de capacité de canal de données et des deuxièmes informations de capacité de canal de données.

2. Le procédé selon la revendication 1, le procédé comprenant en outre :
le fait d'envoyer, par le dispositif de réseau central, la liste d'applications de canal de données à au moins un dispositif parmi le premier dispositif de terminal et le deuxième dispositif de terminal.

3. Le procédé selon la revendication 1, dans lequel le fait d'obtenir (201), par un dispositif de réseau central, des premières informations de capacité de canal de données d'un premier dispositif de terminal comprend :
le fait de recevoir, par le dispositif de réseau central, les premières informations de capacité de canal de données envoyées par le premier dispositif de terminal durant l'établissement d'un canal de données d'amorce ;
ou
le fait de recevoir, par le dispositif de réseau central, les premières informations de capacité de canal de données envoyées par le premier dispositif de terminal par l'intermédiaire d'un canal de données d'amorce ;
ou
le fait d'envoyer, par le dispositif de réseau central, un premier message de demande au premier dispositif de terminal, dans lequel le premier message de demande est utilisé pour ordonner au premier dispositif de terminal d'envoyer les premières informations de capacité de canal de données ; et
le fait de recevoir, par le dispositif de réseau central, les premières informations de capacité de canal de données envoyées par le premier dispositif de terminal en réponse au premier message de demande ;
ou
le fait d'obtenir, par le dispositif de réseau central, les premières informations de capacité de canal de données envoyées par le premier dispositif de terminal durant l'enregistrement.

4. Le procédé selon la revendication 3, dans lequel le fait de recevoir, par le dispositif de réseau central, les premières informations de capacité de canal de données envoyées par le premier dispositif de terminal durant l'établissement d'un canal de données d'amorce comprend :
le fait de recevoir, par le dispositif de réseau central, un deuxième message de demande ;
ou
le fait de recevoir, par le dispositif de réseau central, les premières informations de capacité de canal de données envoyées par un serveur d'applications en réponse à un deuxième message de demande ; dans lequel
le deuxième message de demande est un message de demande pour établir le canal de données d'amorce durant l'établissement du canal de données d'amorce, et le deuxième message de demande véhicule les premières informations de capacité de canal de données ; dans lequel
un en-tête d'autorisation du deuxième message de demande véhicule les premières informations de capacité de canal de données ;
ou
un en-tête pris en charge du deuxième message de demande véhicule les premières informations de capacité de canal de données ;
ou
le deuxième message de demande comprend un premier en-tête, et le premier en-tête véhicule les premières informations de capacité de canal de données ;
ou
le deuxième message de demande comprend des premières informations d'attribut de canal de données, et les premières informations d'attribut de canal de données véhiculent les premières informations de capacité de canal de données.

5. Le procédé selon la revendication 3, dans lequel le fait d'envoyer, par le dispositif de réseau central, un premier message de demande au premier dispositif de terminal comprend :
le fait d'envoyer, par le dispositif de réseau central, un troisième message de demande à un serveur d'applications, dans lequel le troisième message de demande est utilisé pour ordonner au serveur d'applications d'envoyer le premier message de demande au premier dispositif de terminal ; et
le fait de recevoir, par le dispositif de réseau central, les premières informations de capacité de canal de données envoyées par le premier dispositif de terminal en réponse au premier message de demande comprend :
le fait de recevoir, par le dispositif de réseau central, les premières informations de capacité de canal de données envoyées par le premier dispositif de terminal par le biais du serveur d'applications.

6. Le procédé selon la revendication 1, dans lequel le fait d'obtenir (202), par le dispositif de réseau central, des deuxièmes informations de capacité de canal de données d'un deuxième dispositif de terminal comprend :
le fait de recevoir, par le dispositif de réseau central, les deuxièmes informations de capacité de canal de données envoyées par le deuxième dispositif de terminal durant l'établissement d'un canal de données d'amorce ;
ou
le fait de recevoir, par le dispositif de réseau central, les deuxièmes informations de capacité de canal de données envoyées par le deuxième dispositif de terminal par l'intermédiaire d'un canal de données d'amorce ;
ou
le fait d'envoyer, par le dispositif de réseau central, un quatrième message de demande au deuxième dispositif de terminal, dans lequel le quatrième message de demande est utilisé pour ordonner au deuxième dispositif de terminal d'envoyer les deuxièmes informations de capacité de canal de données ; et
le fait de recevoir, par le dispositif de réseau central, les deuxièmes informations de capacité de canal de données envoyées par le deuxième dispositif de terminal en réponse au quatrième message de demande ;
ou
le fait d'obtenir, par le dispositif de réseau central, les deuxièmes informations de capacité de canal de données envoyées par le deuxième dispositif de terminal durant l'enregistrement.

7. Le procédé selon la revendication 1, le procédé comprenant en outre :
le fait d'envoyer, par le dispositif de réseau central, les premières informations de capacité de canal de données au deuxième dispositif de terminal ; dans lequel
les deuxièmes informations de capacité de canal de données comprennent au moins une capacité de canal de données dans une intersection d'une capacité de canal de données prise en charge par le deuxième dispositif de terminal et d'une capacité de canal de données prise en charge par le premier dispositif de terminal et indiquée par les premières informations de capacité de canal de données.

8. Le procédé selon la revendication 7, dans lequel le fait d'envoyer, par le dispositif de réseau central, les premières informations de capacité de canal de données au deuxième dispositif de terminal comprend :
le fait d'envoyer, par le dispositif de réseau central, un sixième message de demande à un serveur d'applications, dans lequel le sixième message de demande est utilisé pour ordonner au serveur d'applications d'envoyer les premières informations de capacité de canal de données au deuxième dispositif de terminal.

9. Le procédé selon la revendication 1, dans lequel la liste d'applications de canal de données comprend des informations d'applications de canal de données prises en charge à la fois par le premier dispositif de terminal et le deuxième dispositif de terminal ; ou
la liste d'applications de canal de données comprend des informations d'applications prises en charge par le deuxième dispositif de terminal et satisfaisant à une première condition prédéfinie, dans lequel la première condition prédéfinie comprend le fait que le dispositif de réseau central est capable de traiter des données d'applications de canal de données en des données reconnaissables par le premier dispositif de terminal ; ou
la liste d'applications de canal de données comprend des informations d'applications prises en charge par le premier dispositif de terminal et satisfaisant à une deuxième condition prédéfinie, dans lequel la deuxième condition prédéfinie comprend le fait que le dispositif de réseau central est capable de traiter des données d'applications de canal de données en des données reconnaissables par le deuxième dispositif de terminal.

10. Un procédé pour traiter une liste d'applications de canal de données, comprenant :
le fait d'envoyer (301), par un premier dispositif de terminal, des premières informations de capacité de canal de données du premier dispositif de terminal à un dispositif de réseau central ; et
le fait de recevoir (302), par le premier dispositif de terminal, une liste d'applications de canal de données envoyée par le dispositif de réseau central ;
dans lequel il est en outre **caractérisé en ce que** :
la liste d'applications de canal de données est générée par le dispositif de réseau central sur la base des premières informations de capacité de canal de données et des deuxièmes informations de capacité de canal de données, et les deuxièmes informations de capacité de canal de données sont des informations de capacité de canal de données d'un deuxième dispositif de terminal.

11. Le procédé selon la revendication 10, dans lequel le fait d'envoyer (301), par un premier dispositif de terminal, des premières informations de capacité de canal de données du premier dispositif de terminal à un dispositif de réseau central comprend :
le fait d'envoyer, par le premier dispositif de terminal, les premières informations de capacité de canal de données au dispositif de réseau central durant l'établissement d'un canal de données d'amorce ;
ou
le fait d'envoyer, par le premier dispositif de terminal, les premières informations de capacité de canal de données au dispositif de réseau central par l'intermédiaire d'un canal de données d'amorce ;
ou
le fait de recevoir, par le premier dispositif de terminal, un premier message de demande envoyé par le dispositif de réseau central, dans lequel le premier message de demande est utilisé pour ordonner au premier dispositif de terminal d'envoyer les premières informations de capacité de canal de données ; et
le fait d'envoyer, par le premier dispositif de terminal, les premières informations de capacité de canal de données au dispositif de réseau central en réponse au premier message de demande ;
ou
le fait d'envoyer, par le premier dispositif de terminal, les premières informations de capacité de canal de données au dispositif de réseau central durant l'enregistrement.

12. Un dispositif de réseau central (1100), comprenant un processeur (1101) et une mémoire (1103), dans lequel la mémoire (1103) stocke un programme ou une instruction capable de tourner sur le processeur (1101), dans lequel, lorsque le programme ou l'instruction est exécuté(e) par le processeur (1101), les étapes du procédé pour traiter une liste d'applications de canal de données selon l'une quelconque des revendications 1 à 9 sont mises en œuvre.

13. Un dispositif de terminal (1000), comprenant un processeur (1010) et une mémoire (1009), dans lequel un programme ou une instruction capable de tourner sur le processeur (1010) est stocké(e) dans la mémoire (1009), et, lorsque le programme ou l'instruction est exécuté(e) par le processeur (1010), les étapes du procédé pour traiter une liste d'applications de canal de données selon la revendication 10 ou la revendication 11 sont mises en oeuvre.

14. Une puce, comprenant un processeur et une interface de communication, dans laquelle l'interface de communication est couplée au processeur, et le processeur est configuré pour exécuter un programme ou une instruction afin de mettre en œuvre les étapes du procédé pour traiter une liste d'applications de canal de données selon l'une quelconque des revendications 1 à 9, ou les étapes du procédé pour traiter une liste d'applications de canal de données selon l'une quelconque des revendications 10 à 11.

15. Un produit de programme informatique, le produit de programme étant stocké dans un support de stockage non volatil, et le produit de programme étant exécuté par au moins un processeur afin de mettre en œuvre les étapes du procédé pour traiter une liste d'applications de canal de données selon l'une quelconque des revendications 1 à 9, ou les étapes du procédé pour traiter une liste d'applications de canal de données selon l'une quelconque des revendications 10 à 11.
